# FASCICULE DE BREVET EUROPEEN

(11) **EP 2 580 553 B1**
(45) Date de publication et mention de la délivrance du brevet: **04.05.2016**
(21) Numéro de dépôt: 11743947.1
(22) Date de dépôt: 10.06.2011
(51) Int. Cl.: F24F 13/18, F24F 12/00, F28F 21/00, F28F 9/02, F28D 9/00, F28D 21/00

(54) **CORPS D'ÉCHANGE THERMIQUE ET ÉCHANGEUR COMPRENANT UN TEL CORPS D'ÉCHANGE**
WÄRMEAUSTAUSCHKÖRPER UND WÄRMETAUSCHER MIT EINEM DERARTIGEN WÄRMEAUSTAUSCHKÖRPER
HEAT-EXCHANGE BODY AND HEAT EXCHANGER COMPRISING SUCH A HEAT-EXCHANGE BODY

(30) Priorité: 11.06.2010 BE 201000352
(43) Date de publication de la demande: 17.04.2013
(73) Titulaire: Greencom Development SCRL, 4430 Ans (BE)
(72) Inventeur: PRIEELS, LUC, B-1370 Mélin (BE)
(74) Mandataire: Powis de Tenbossche, Roland
(86) Numéro de dépôt international: PCT/BE2011/000037
(87) Numéro de publication internationale: WO 2011/153595

(56) Documents cités:
- EP-A2- 0 829 692
- WO-A1-2008/037079
- WO-A2-2009/024953
- US-A- 4 040 804
- US-A- 6 059 023
- US-A1- 2004 206 486
- US-B1- 6 408 941

## Description

La présente invention a pour objet un corps d'échange pour le transfert de calories entre un premier fluide gazeux et un deuxième fluide gazeux.

De nombreux corps d'échange pour le transfert de calories entre deux fluides gazeux ont été proposés.

De tels corps d'échange, par exemple pour échanger des calories entre un premier flux d'air, par exemple flux d'air sortant d'une pièce, et un deuxième flux d'air, flux d'air entrant, ont été réalisés en matériau conducteur de la chaleur, par exemple en aluminium.

De tels corps d'échange en aluminium permettent un bon transfert de calories d'un fluide vers un autre, mais cause également un transfert de chaleur dans le corps, et donc par exemple un transfert de chaleur important de l'extérieur vers l'intérieur. De tels corps d'échanges sont coûteux, s'encrassent rapidement et des phénomènes d'oxydation ont lieu. De plus, lorsque la température extérieure est particulièrement froide, des problèmes de formation de glace dans le corps d'échange sont possibles.

On a alors essayé de développer des corps d'échange bon marché.

Par exemple, dans les document US718866 et WO2004/070284, on propose un corps d'échange constitué de couches de papier plié en zig-zag, séparées l'une de l'autre par une couche de papier. Les couches de papier plié en zig-zag sont agencées pour qu'une couche canalisant un premier fluide entre une feuille inférieure et une feuille supérieure, dans une direction, soit située entre deux couches canalisant un deuxième fluide s'écoulant dans une direction orthogonale. Le transfert de chaleur s'opère donc uniquement à travers les feuilles de papier planes.

Un corps d'échange similaire est décrit dans le document WO2009/024953.

La surface d'échange pour le transfert de chaleur entre les deux fluides est donc limitée.

La présente invention vise à produire un corps d'échange peu coûteux, évitant le problème de transfert de chaleur entre le côté extérieur et le côté intérieur, apte à être facilement recyclé, tout en assurant un excellent transfert de chaleur entre les fluides.

L'invention a pour objet un corps d'échange pour le transfert de calorie d'un premier fluide gazeux vers un deuxième fluide gazeux, ledit corps d'échange étant formé par une feuille ou un film plié ou courbé en accordéon définissant une première série de portions courbes ou pliées de la feuille ou film, une deuxième série de portions courbes ou pliées de la feuille ou film, une série de parois d'échange transversales sensiblement planes et sensiblement parallèles entre elles s'étendant chacune entre une portion courbe ou pliée de la première série et une portion courbe ou pliée de la deuxième série, ladite feuille ou film plié ou courbé formant ainsi une première série de canaux et une deuxième série de canaux, lesdits canaux s'étendant transversalement entre un premier bord extrême longitudinal de la feuille ou du film plié ou courbé, et un deuxième bord extrême longitudinal de la feuille ou du film plié ou courbé opposé audit premier bord extrême longitudinal, le corps d'échange étant adapté pour être associé à :
- une première paroi longitudinale s'étendant le long du premier bord extrême longitudinal de la feuille ou du film,
- une deuxième paroi longitudinale s'étendant le long du deuxième bord extrême longitudinal de la feuille ou du film,
- une troisième paroi s'étendant le long d'au moins un bord ou une arrête des portions courbes ou pliées de la première série, et
- une quatrième paroi s'étendant le long d'au moins un bord ou une arrête des portions courbes ou pliées de la deuxième série,
de manière à former un premier circuit constitué de canaux de la première série pour une circulation du premier fluide et un deuxième circuit constitué de canaux de la deuxième série pour une circulation du deuxième fluide.
On connaît par le document US6408941 un corps d'échange du type décrit ci-avant. Selon l'invention, le corps d'échange est essentiellement caractérisé en ce que les parois d'échange transversales sensiblement planes présentent une épaisseur de moins de 0,5mm, avantageusement moins de 0,3mm, de préférence une épaisseur comprise entre 0,05mm et 0,1mm,
en ce que les parois d'échange transversales sensiblement planes, avantageusement sensiblement parallèles entre elles) sont réalisées en un matériau au moins résistant à la vapeur d'eau et à l'eau, et présentant une conductivité thermique moyenne de moins de 0,25 W/(m.K), en particulier de moins de 0,20 W/(m.K) dans le sens de la longueur de la paroi d'échange considérée,
en ce que les parois d'échange transversales présentent une hauteur d'au moins 1 cm et une longueur d'au moins 3cm, le rapport longueur / hauteur étant supérieur à 1,5, avantageusement inférieur à 5, de préférence compris entre 2 et 4, en particulier compris entre 2 et 3 ;
en ce que les parois présentent chacune au moins un renfoncement adapté pour prendre appui sur une paroi adjacente ou sur un renforcement d'une paroi adjacente, de manière à former dans le canal entre lesdites parois adjacentes au moins un élément guidant le fluide circulant dans ledit canal, ledit élément (7) étant adapté pour accroître la surface d'échange, la longueur du parcours du gaz et/ou la turbulence du flux, de manière à accroître l'échange thermique d'un fluide (G1) vers l'autre fluide (G2), et
en ce que les portions planes des parois adjacente définissant un canal sont distantes l'une de l'autre d'une distance de moins de 8mm, avantageusement de moins de 6mm.
Un tel corps d'échange développe une grande surface d'échange thermique entre le premier fluide et le deuxième fluide. De plus, l'épaisseur des parois d'échange est très faible, de sorte que le gradient thermique entre la face tournée vers le premier fluide et la face opposée tournée vers le deuxième fluide est très faible.

Des particularités du corps d'échange selon l'invention sont données dans les revendications attachées au présent mémoire.

Le corps d'échange présente une densité surfacique de moins de 500g/m², avantageusement de moins de 300g/m², de préférence de moins de 200g/m², plus spécifiquement de moins de 100g/m², en particulier comprise entre 25g/m² et 100g/m², et une densité volumique apparente de moins de 250kg/m³, avantageusement de moins de 150kg/m³, de préférence de moins de 100 kg/m³, plus spécifiquement comprise entre 25 kg/m³ et 75kg/m³.

Selon une forme de réalisation avantageuse, le corps d'échange présente une densité de surface en m² de surface d'échange / m³ de plus de 400m²/m³, avantageusement de plus de 500m²/m³, de préférence de plus de 600 m²/m³, par exemple compris entre 700m²/m³ et 2000m²/m³. Des exemples particuliers de densité surfacique par unité de volume sont 700m²/m³, 800m²/m³, 850m²/m³, 900m²/m³, 950m²/m³, 1000m²/m³, 1100m²/m³, 1200m²/m³, 1500m²/m³, 1800m²/m³.

Les parois d'échange du corps d'échange sont par exemple réalisées en papier, papier recouvert d'une couche de protection, en matière plastique, en matériau composite, en matériaux fibreux, en tissus imprégnés, etc.
Le matériau utilisé peut également être une structure sous forme de film ou couche comprenant une ou des zones présentant une haute conductivité thermique, par exemple une conductivité thermique supérieure à 10 W/(m.K), avantageusement supérieure à 100 W/(m.K).

Selon une particularité avantageuse, les parois présentent sur leurs deux faces sensiblement planes un ou des renfoncements, un ou des renfoncements d'une première face prenant appui sur une face d'une première paroi adjacente ou un renfoncement d'une face d'une première paroi adjacente, tandis que un ou des renfoncements de la deuxième face prend appui sur une face d'une deuxième paroi adjacente,ou un renfoncement d'une deuxième paroi adjacente.

Ces renfoncements s'étendant dans des ou les canaux formés entre les parois d'échange sensiblement planes assurent une cohésion mécanique, une résistance à un écrasement ou à des différences de pression entre les fluides s'écoulant dans les canaux, mais également un écoulement de fluide plus régulier, tout en favorisant l'échange thermique entre les deux fluides.

En prenant le cas de parois d'échange planes parallèles entre elles, la profondeur d'un renfoncement ou la hauteur de l'ondulation formée par le renfoncement est avantageusement égale ou sensiblement égale à la distance séparant les parois adjacentes tournées l'une vers l'autre définissant un canal, c'est-à-dire à la largeur du canal, dans le cas où le renfoncement d'une paroi est adapté à toucher la paroi adjacente. Dans le cas de parois d'échange planes avec un ou des renfoncements d'une paroi touchant un ou des renfoncements d'une paroi adjacente, la profondeur des renfoncements ou la hauteur des ondulations est choisie pour que la somme des profondeurs des renfoncements qui se touchent dans un canal s'étendant entre deux parois adjacentes, ou la somme des hauteurs des ondulations qui se touchent dans un canal s'étendant entre deux parois adjacentes est égale ou sensiblement égale à la largeur du canal défini entre lesdites deux parois.
La profondeur des renfoncements ou la hauteur des ondulations peut être variable par exemple pour les parois, ou selon les faces d'une paroi, etc. De façon avantageuse, les renfoncements ou ondulations s'étendant le long d'une face d'une paroi présente sensiblement une même profondeur ou une même hauteur. Selon une forme de réalisation avantageuse, chaque paroi présente sur chacune de ses faces des renfoncements ou ondulations, les renfoncements ou ondulations présentes sur une face présentant sensiblement une même profondeur ou hauteur qui est supérieure à la profondeur ou hauteur que présente les renfoncements ou ondulations présentes sur la face opposée.

Selon une forme de réalisation, les renfoncements des parois sensiblement planes s'étendent sensiblement sur au moins 50% de la longueur transversale des parois, le long d'un axe incliné par rapport à la direction transversale des parois.

Avantageusement, les renfoncements présentent au moins une portion s'étendant le long d'un axe formant un angle compris entre 1° et 45°, avantageusement compris entre 3° et 30°, par exemple entre 5° et 25° par rapport à la direction transversale des parois.

Les parois planes d'échange thermique peuvent éventuellement telles que deux parois successives soient inclinées l'une par rapport à l'autre, par exemple en formant entre elles un angle compris entre 5° et 30°, en particulier entre 10° et 25°, avantageusement environ 15°.
Les renfoncements ou ondulations présents sur une face de la paroi ont alors une profondeur ou une hauteur qui varie en fonction de l'angle d'inclinaison entre les parois adjacentes.

Selon une particularité d'une forme de réalisation, chaque paroi du corps d'échange présente sur chacune de ses faces une série de renfoncements s'étendant le long d'un axe formant un angle compris entre 1°et 45°, avantageusement entre 3° et 30°, de préférence entre 5° et 25° par rapport à la direction transversale de la paroi considérée, tandis que les renfoncements de deux parois adjacentes sont agencés de manière à ce que des renfoncements d'une première paroi prennent appui sur des renfoncements de la deuxième paroi en un ou des points ou zones distants l'un de l'autre.

Selon un détail de formes de réalisation avantageuses, la portion courbe ou le pli s'étendant entre deux parois d'échange successives présente un axe de pliage ou de courbure, les axes de pliage ou de courbure entre les parois d'échange étant sensiblement parallèles entre eux.

L'invention a encore pour objet une cassette comprenant au moins :
- un corps d'échange selon l'invention :
- une première paroi longitudinale s'étendant le long du premier bord extrême longitudinal de la feuille ou du film,
- une deuxième paroi longitudinale s'étendant le long du deuxième bord extrême longitudinal de la feuille ou du film,
- une troisième paroi s'étendant le long d'au moins un bord ou arrête des portions courbes ou pliées de la première série, et
- une quatrième paroi s'étendant le long d'au moins un bord ou une arrête des portions courbes ou pliées de la deuxième série,
lesdites première, deuxième, troisième et quatrième parois formant un premier circuit constitué de canaux de la première série pour une circulation du premier fluide et un deuxième circuit constitué de canaux de la deuxième série pour une circulation du deuxième fluide,
des ouvertures étant présentes pour permettre au premier fluide de rentrer dans la première série de canaux du corps d'échange et d'en sortir, tandis que des ouvertures sont présentes pour permettre au deuxième fluide de rentrer dans la deuxième série de canaux du corps d'échange et d'en sortir.
De façon avantageuse, les troisième et quatrième parois ne recouvrent que partiellement le bord ou arrête des portions courbes ou pliées respectivement de la première série et de la deuxième série, de manière à définir deux zones ouvertes séparées par la troisième paroi définissant une entrée et une sortie pour les canaux de la première série, et deux autre zones ouvertes séparées par la quatrième paroi définissant une entrée et une sortie pour les canaux de la deuxième série.
Les troisième et quatrième parois sont avantageusement sensiblement parallèles entre elles.

De façon avantageuse, une ou des ouvertures sont associées à un grillage et/ou à un élément filtrant

La cassette suivant l'invention est avantageusement munie d'un ou de moyens empêchant le fonctionnement du premier et/ou deuxième moyen mécanique, en cas de positionnement incorrect de la cassette par rapport à un support d'un ensemble destiné à former avec la cassette un échangeur de chaleur.

Un autre objet selon invention est un échangeur de chaleur comportant au moins :
- un support ;
- un corps d'échange selon l'invention porté par ledit support ;
- une première paroi longitudinale s'étendant le long du premier bord extrême longitudinal de la feuille ou du film,
- une deuxième paroi longitudinale s'étendant le long du deuxième bord extrême longitudinal de la feuille ou du film,
- une troisième paroi s'étendant le long d'au moins un bord ou une arrête de portions courbes ou pliées de la première série, et
- une quatrième paroi s'étendant le long d'au moins un bord ou une arrête de portions courbes ou pliées de la deuxième série,
   lesdites première, deuxième, troisième et quatrième parois formant un premier circuit constitué de canaux de la première série pour une circulation du premier fluide et un deuxième circuit constitué de canaux de la deuxième série pour une circulation du deuxième fluide,
   ledit corps d'échange et lesdites première, deuxième, troisième et quatrième parois formant avantageusement une cassette selon l'invention,
- un premier moyen mécanique pour générer une circulation du premier fluide dans le premier circuit, et
- un deuxième moyen mécanique pour générer une circulation du deuxième fluide dans le deuxième circuit.

Avantageusement, le premier moyen mécanique est adapté pour pousser le premier fluide dans une première chambre de distribution, ladite première chambre de distribution présentant une ouverture pour recevoir le premier fluide provenant du premier moyen mécanique et une ouverture ou série d'ouvertures communiquant avec une série de passage d'entrée vers des canaux de la première série formant le premier circuit. Ladite chambre de distribution est adaptée pour qu'au moins pour 75% des canaux de la première série, avantageusement au moins 85% des canaux de la première série, de préférence au moins 95% des canaux de la première série, le débit de fluide (exprimé en litre par minute) passant dans un canal est compris entre 50% et 150%, avantageusement entre 75% et 125%, de préférence entre 85% et 115% du débit moyen de fluide passant dans un canal des canaux de la première série, ledit débit moyen étant égal au débit total de fluide passant par tous lesdits canaux divisé par le nombre de canaux.
Par exemple, ladite première chambre de distribution comporte une portion longitudinale avec une ouverture longitudinale pour amener le premier fluide de la chambre vers les canaux de la première série, ladite portion longitudinale de la chambre de distribution présentante par exemple une section de passage mesurée dans un plan perpendiculaire à la direction longitudinale qui est variable. Ladite portion longitudinale de la chambre de distribution présente une première extrémité adjacente de l'ouverture communiquant avec le premier moyen mécanique poussant le premier fluide, et une deuxième extrémité opposée à ladite première extrémité, la section de passage de la portion longitudinale variant entre une première section de passage adjacente de la première extrémité et une deuxième section de passage adjacente de la deuxième extrémité, ladite deuxième section de passage étant inférieure d'au moins 10% par rapport à la première section de passage. Avantageusement, la section de passage de ladite portion longitudinale varie sensiblement de manière continue entre ladite première section de passage et ladite seconde section de passage.

Avantageusement, le deuxième moyen mécanique est adapté pour pousser le deuxième fluide dans une deuxième chambre de distribution, ladite deuxième chambre de distribution présentant une ouverture pour recevoir le deuxième fluide provenant du deuxième moyen mécanique et une ouverture ou série d'ouvertures communiquant avec une série de passage d'entrée vers des canaux de la deuxième série formant le deuxième circuit. Ladite deuxième chambre de distribution est avantageusement adaptée pour qu'au moins pour 75% des canaux de la deuxième série, avantageusement au moins 85% des canaux de la deuxième série, de préférence au moins 95% des canaux de la deuxième série, le débit de deuxième fluide (exprimé en litre par minute) passant dans un canal est compris entre 50% et 150%, avantageusement entre 75% et 125%, de préférence entre 85% et 115% du débit moyen de deuxième fluide passant dans un canal des canaux de la deuxième série, ledit débit moyen étant égal au débit total de fluide passant par tous lesdits canaux divisé par le nombre de canaux.
Par exemple, ladite deuxième chambre de distribution comporte une portion longitudinale avec une ouverture longitudinale pour amener le deuxième fluide de la chambre vers les canaux de la deuxième série, ladite portion longitudinale de la deuxième chambre de distribution présentante par exemple une section de passage mesurée dans un plan perpendiculaire à la direction longitudinale qui est variable. Ladite portion longitudinale de la deuxième chambre de distribution présente une première extrémité adjacente de l'ouverture communiquant avec le deuxième moyen mécanique poussant le deuxième fluide, et une deuxième extrémité opposée à ladite première extrémité, la section de passage de la portion longitudinale variant entre une première section de passage adjacente de la première extrémité et une deuxième section de passage adjacente de la deuxième extrémité, ladite deuxième section de passage étant inférieure d'au moins 10% par rapport à la première section de passage. Avantageusement, la section de passage de ladite portion longitudinale varie sensiblement de manière continue entre ladite première section de passage et ladite seconde section de passage.

Selon une forme de réalisation, le corps d'échange a une forme sensiblement parallélépipèdique, et est logé dans une chambre sensiblement parallélépipèdique présentant une paroi inférieure et une paroi supérieure sensiblement parallèles entre elles. Le corps d'échange présente une face supérieure avec des passages pour une série de canaux et une face inférieure avec des passages l'autre série de canaux, lesdites faces inférieure et supérieure étant sensiblement parallèles entre elles. Les faces inférieure et supérieure du corps d'échange sont inclinées par rapport respectivement par rapport à la paroi inférieure et la paroi supérieure de la chambre, de manière à définir une chambre de distribution inférieure et une chambre de distribution supérieure. L'inclinaison entre la face inférieure du corps d'échange et la paroi inférieure de la chambre est par exemple comprise entre 1° et 20°, avantageusement entre 2° et 10°, par exemple 3°, 5° et 7°. L'inclinaison entre la face supérieure du corps d'échange et la paroi supérieure de la chambre est par exemple comprise entre 1° et 20°, avantageusement entre 2° et 10°, par exemple 3°, 5° et 7°.

Selon un détail d'une forme de réalisation possible, la première série de portions courbes ou pliées du corps d'échange s'étendent dans un plan à un niveau situé en dessous du niveau de la deuxième série de portions courbes ou pliées, les portions courbes ou pliées de la première série formant le fond d'une série de canaux s'étendant entre un premier bord extrême longitudinal de la feuille ou du film plié ou courbé, et un deuxième bord extrême longitudinal de la feuille ou du film plié ou courbé opposé audit premier bord extrême longitudinal, le fond de ladite série de canaux présentant une inclinaison de 3° à 90°, avantageusement de 5° à 45°, de préférence de 5° à 15° par rapport à un plan horizontal.

L'échangeur selon l'invention est avantageusement un échangeur où les fluides s'écoulent à contre-courant.

Selon une particularité avantageuse, la troisième paroi présente une face sensiblement plane s'étendant le long d'au moins un bord ou une arrête de portions courbes ou pliées de la première série, ladite surface plane étant inclinée par rapport à un plan horizontal, avec une inclinaison de 3° à 90°, avantageusement de 5° à 45°, de préférence de 5° à 15°.

Selon une forme de réalisation particulière, l'échangeur comporte un boîtier présentant une première ouverture ou série de premières ouvertures pour l'amenée du premier fluide vers le premier moyen mécanique, par exemple un ou des ventilateurs, poussant ledit premier fluide dans des canaux (première série) du corps d'échange, une deuxième ouverture ou série de deuxièmes ouvertures pour l'évacuation du premier fluide après son passage dans la première série de canaux du corps d'échange, une troisième ouverture ou série de troisièmes ouvertures pour l'entrée du deuxième fluide vers le deuxième moyen mécanique, par exemple un ou des ventilateurs, poussant ledit deuxième fluide dans des canaux (deuxième série) du corps d'échange, et une quatrième ouverture ou série de quatrièmes ouvertures pour évacuer hors du boîtier le deuxième fluide sortant de la deuxième série de canaux, dans lequel lesdites ouvertures sont distinctes l'une de l'autre.

Avantageusement, le boîtier comporte une pluralité de deuxième ouvertures pour évacuer le premier fluide hors du boîtier et/ou de quatrièmes ouvertures pour évacuer le deuxième fluide hors du boîtier. Lesdites deuxièmes ouvertures et/ou quatrièmes ouvertures sont avantageusement adaptées pour diviser le premier fluide ou le deuxième fluide poussé par le premier ou deuxième moyen mécanique, en une série de jets distincts présentant une vitesse de sortie supérieure à 1 m/s, avantageusement supérieure à 4 m/s.

De préférence, le boîtier comprend un ou des grillages ou éléments filtrants pour la ou les ouvertures du boîtier et/ou situés dans les canaux de la chambre du boîtier.

Selon une particularité, le boîtier comprend au moins une porte mobile ou amovible, par exemple articulée, qui une fois ouverte ou enlevée permet un accès au moins au corps d'échange et éléments filtrants, voire aux ventilateurs, éventuellement après enlèvement de la troisième ou quatrième paroi.

La cassette suivant l'invention a avantageusement la forme d'un boîtier comprenant une chambre recevant un corps d'échange selon l'invention, ainsi qu'au moins une première chambre de distribution présentant une ouverture pour recevoir le premier fluide provenant du premier moyen mécanique et une ouverture ou série d'ouvertures communiquant avec une série de passage d'entrée vers des canaux de la première série formant le premier circuit, et/ou (avantageusement et) une deuxième chambre de distribution, ladite deuxième chambre de distribution présentant une ouverture pour recevoir le deuxième fluide provenant du deuxième moyen mécanique et une ouverture ou série d'ouvertures communiquant avec une série de passage d'entrée vers des canaux de la deuxième série formant le deuxième circuit.

La dite ouverture de la première ou deuxième chambre de distribution est avantageusement adaptée pour assurer une étanchéité avec un conduit communiquant avec le premier ou deuxième moyen mécanique.

Selon une forme de réalisation, le boîtier comprend un ou des moyens pour empêcher le fonctionnement du premier et/ou deuxième moyen mécanique, lorsque ledit boîtier n'est pas placé correctement dans le support d'un échangeur de chaleur.

Selon une forme de réalisation particulière, le boîtier comporte un logement dans lequel est placé ou monté le premier moyen mécanique et/ou un logement dans lequel est placé ou monté le deuxième moyen mécanique. Dans ce cas, le boîtier comporte avantageusement un système de connexion permettant l'alimentation du premier moyen mécanique et/ou deuxième moyen mécanique monté sur le boîtier, lorsque le boîtier est placé correctement sur le support d'un dispositif destiné à former un échangeur de chaleur, ledit système de connexion empêchant l'alimentation en énergie du premier et/ou deuxième moyen mécanique en cas de placement incorrect du boîtier sur le support ou dans l'échangeur.

Ladite première chambre de distribution est avantageusement adaptée pour qu'au moins pour 75% des canaux de la première série, avantageusement au moins 85% des canaux de la première série, de préférence au moins 95% des canaux de la première série, le débit de fluide (exprimé en litre par minute) passant dans un canal est compris entre 50% et 150%, avantageusement entre 75% et 125%, de préférence entre 85% et 115% du débit moyen de fluide passant dans un canal des canaux de la première série, ledit débit moyen étant égal au débit total de fluide passant par tous lesdits canaux divisé par le nombre de canaux.
Par exemple, ladite première chambre de distribution comporte une portion longitudinale avec une ouverture longitudinale pour amener le premier fluide de la chambre vers les canaux de la première série, ladite portion longitudinale de la chambre de distribution présentante par exemple une section de passage mesurée dans un plan perpendiculaire à la direction longitudinale qui est variable. Ladite portion longitudinale de la chambre de distribution présente une première extrémité adjacente de l'ouverture communiquant avec le premier moyen mécanique poussant le premier fluide, et une deuxième extrémité opposée à ladite première extrémité, la section de passage de la portion longitudinale variant entre une première section de passage adjacente de la première extrémité et une deuxième section de passage adjacente de la deuxième extrémité, ladite deuxième section de passage étant inférieure d'au moins 10% par rapport à la première section de passage. Avantageusement, la section de passage de ladite portion longitudinale varie sensiblement de manière continue entre ladite première section de passage et ladite seconde section de passage.

Ladite deuxième chambre de distribution est avantageusement adaptée pour qu'au moins pour 75% des canaux de la deuxième série, avantageusement au moins 85% des canaux de la deuxième série, de préférence au moins 95% des canaux de la deuxième série, le débit de deuxième fluide (exprimé en litre par minute) passant dans un canal est compris entre 50% et 150%, avantageusement entre 75% et 125%, de préférence entre 85% et 115% du débit moyen de deuxième fluide passant dans un canal des canaux de la deuxième série, ledit débit moyen étant égal au débit total de fluide passant par tous lesdits canaux divisé par le nombre de canaux.
Par exemple, ladite deuxième chambre de distribution comporte une portion longitudinale avec une ouverture longitudinale pour amener le deuxième fluide de la chambre vers les canaux de la deuxième série, ladite portion longitudinale de la deuxième chambre de distribution présentante par exemple une section de passage mesurée dans un plan perpendiculaire à la direction longitudinale qui est variable. Ladite portion longitudinale de la deuxième chambre de distribution présente une première extrémité adjacente de l'ouverture communiquant avec le deuxième moyen mécanique poussant le deuxième fluide, et une deuxième extrémité opposée à ladite première extrémité, la section de passage de la portion longitudinale variant entre une première section de passage adjacente de la première extrémité et une deuxième section de passage adjacente de la deuxième extrémité, ladite deuxième section de passage étant inférieure d'au moins 10% par rapport à la première section de passage. Avantageusement, la section de passage de ladite portion longitudinale varie sensiblement de manière continue entre ladite première section de passage et ladite seconde section de passage.

Selon une forme de réalisation particulière de la cassette, le corps d'échange a une forme sensiblement parallélépipèdique, et est logé dans une chambre sensiblement parallélépipèdique présentant une paroi inférieure et une paroi supérieure sensiblement parallèles entre elles. Le corps d'échange présente une face supérieure avec des passages pour une série de canaux et une face inférieure avec des passages l'autre série de canaux, lesdites faces inférieure et supérieure étant sensiblement parallèles entre elles. Les faces inférieure et supérieure du corps d'échange sont inclinées par rapport respectivement par rapport à la paroi inférieure et la paroi supérieure de la chambre, de manière à définir une chambre de distribution inférieure et une chambre de distribution supérieure. L'inclinaison entre la face inférieure du corps d'échange et la paroi inférieure de la chambre est par exemple comprise entre 1° et 20°, avantageusement entre 2° et 10°, par exemple 3°, 5° et 7°. L'inclinaison entre la face supérieure du corps d'échange et la paroi supérieure de la chambre est par exemple comprise entre 1° et 20°, avantageusement entre 2° et 10°, par exemple 3°, 5° et 7°.

Selon un détail d'une forme de réalisation possible de la cassette, la première série de portions courbes ou pliées du corps d'échange est adaptée pour s'étendre dans un plan à un niveau situé en dessous du niveau de la deuxième série de portions courbes ou pliées, les portions courbes ou pliées de la première série formant le fond d'une série de canaux s'étendant entre un premier bord extrême longitudinal de la feuille ou du film plié ou courbé, et un deuxième bord extrême longitudinal de la feuille ou du film plié ou courbé opposé audit premier bord extrême longitudinal, le fond de ladite série de canaux présentant une inclinaison de 3° à 90°, avantageusement de 5° à 45°, de préférence de 5° à 15° par rapport à un plan horizontal.

De préférence, le boîtier de la cassette comprend un ou des grillages ou éléments filtrants pour la ou les ouvertures du boîtier et/ou situés dans les canaux de la chambre du boîtier.

Selon une particularité, le boîtier de la cassette comprend au moins une porte mobile ou amovible, qui une fois ouverte ou enlevée permet un accès au moins au corps d'échange, éventuellement après enlèvement de la troisième ou quatrième paroi.

Des particularités et détails de l'invention ressortiront de la description détaillée suivante dans laquelle il est fait référence aux dessins ci-annexés, qui montrent une forme de réalisation préférée de corps d'échange selon l'invention.

Dans ces dessins,
- la figure 1 est une vue (partielle) à plat d'une feuille avant son pliage pour former un corps d'échange selon l'invention pour un échange à contre courant ;
- la figure 2 est une vue en coupe le long de la ligne B-B de la feuille selon la figure 1 ;
- la figure 3 est une vue en coupe le long de la ligne C-C de la feuille selon la figure 1 ;
- la figure 4 est une vue schématique de la feuille de la figure 1 en cours de pliage ;
- la figure 5 est une vue en coupe de la feuille pliée le long de son bord ;
- la figure 6 est une vue de détail d'une zone de pliage de la feuille ;

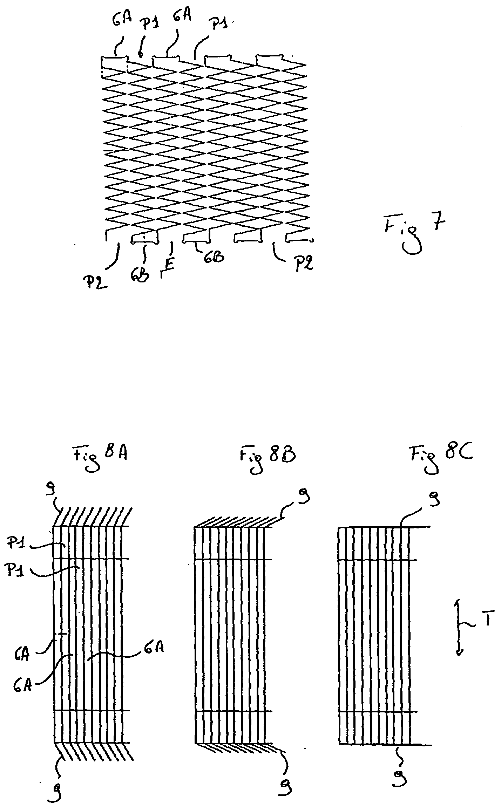

- la figure 7 est une vue en coupe du corps d'échange après pliage au niveau de la ligne C-C;
- les figures 8A à 8C sont des vues montrant le pliage de rabat pour fermer les extrémités longitudinales du corps d'échange ;
- là figure 9 est une vue en perspective du corps d'échange obtenu après pliage de la feuille ;
- la figure 10 est une vue en coupe le long du plan X-X du corps d'échange de la figure 9 ;
- la figure 11 est une vue schématique d'une fenêtre associé à un échangeur de chaleur utilisant un corps d'échange selon l'invention, montrant l'aspiration de l'air intérieur d'un local;
- la figure 12 est une vue schématique de la fenêtre de la figure 11, montrant l'évacuation de l'air intérieur vers le milieu extérieur après son passage par l'échangeur;
- la figure 13 est une vue schématique de la fenêtre de la figure 12, montrant l'aspiration de l'air extérieur;
- la figure 14 est une vue schématique de la fenêtre de la figure 11, montrant l'évacuation de l'air extérieur dans le local après son passage par l'échangeur;
- la figure 15 est une vue en perspective et partiellement en coupe de l'échangeur de chaleur avec les ventilateurs,
- la figure 16 est une vue en coupe de l'échangeur de chaleur le long du plan XVI à la figure 15;

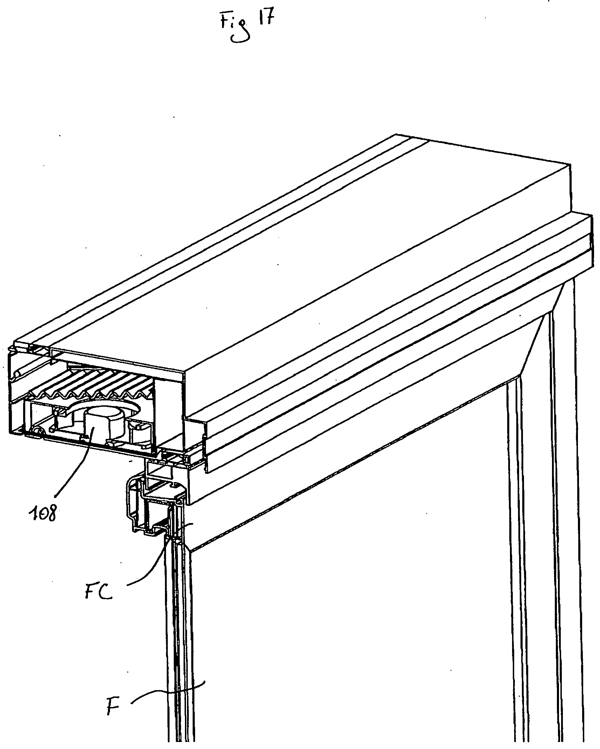

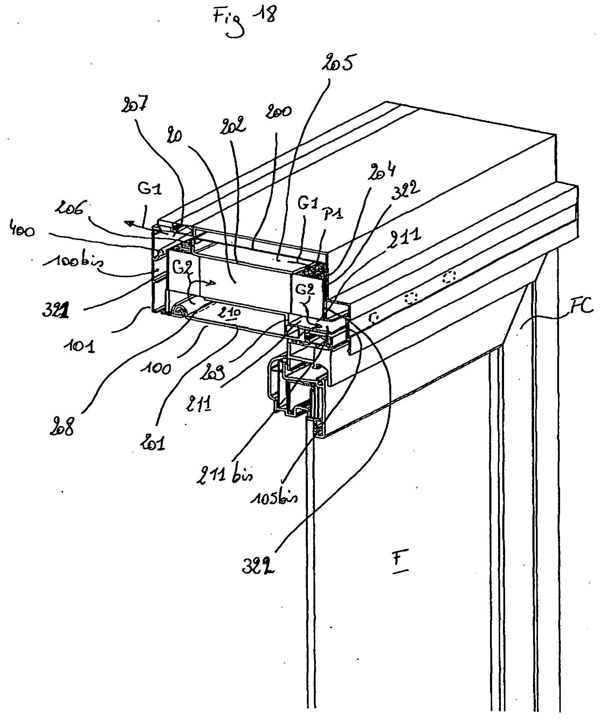

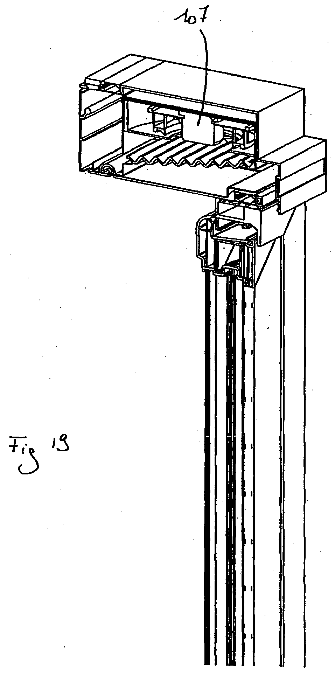

- les figures 17 à 19 sont des vues partielles en perspective et en coupe de la fenêtre de la figure 11, et
- la figure 20 est une vue (partielle) d'une feuille similaire à celle de la figure 1, apte à former après pliage un corps d'échange.

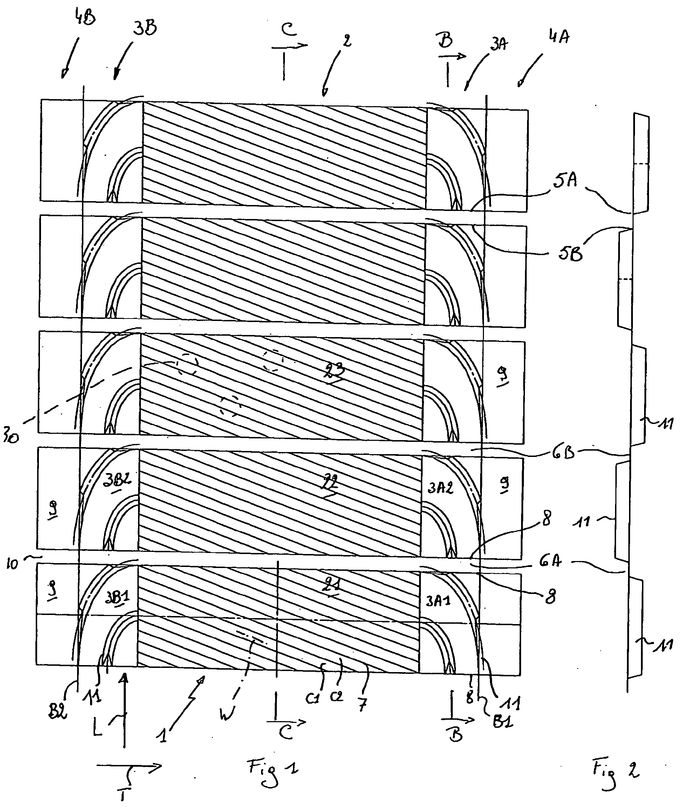

La figure 1 est une vue partielle d'une feuille 1 présentant une direction longitudinale L et une direction transversale T. La feuille comporte une zone centrale 2 située entre deux zones latérales 3A,3B bordées par une zone extrême 4A ou 4B.

La feuille 1 présente une série de lignes de pliage 5A,5B transversales divisant, dans la direction longitudinale, la zone centrale 2 et les zones latérales 3A,3B en une série de portions 21,22,23, ..3A1, 3A2, ..., 3B1, 3B2, ...séparées par des parties intermédiaires 6A,6B, ....
Les portions 21, 22, 23 de la zone centrale présentent une série de renfoncements ou protubérances 7 définissant des canaux C1, C2 pour le gaz. Ces canaux C1,C2 présentent un axe d'écoulement W incliné d'un angle compris entre 15° et 45° par rapport à la direction transversale T.

Les zones intermédiaires 6A,6B ont une largeur correspondant sensiblement à la hauteur des protubérances ou à la profondeur des renfoncements 7 définissant les canaux C1,C2.

Pour faciliter le pliage des zones intermédiaires 6A,6B par rapport aux portions de zones centrale et latérales, des gorges 8 s'étendent le long des zones intermédiaires 6A,6B,...

Les portions des zones latérales 3A,3B s'étendant entre les portions intermédiaires 6A,6B, ... présentent des protubérances courbes 11 s'étendant depuis une gorge 8 jusque vers la portion de la partie centrale 2.

Les portions des zones latérales 3A,3B s'étendant entre des zones intermédiaires 6A,6B,... sont prolongées par des rabats 9, les rabats s'étendant le long d'une zone latérales sont séparés les uns des autres par une découpe 10.

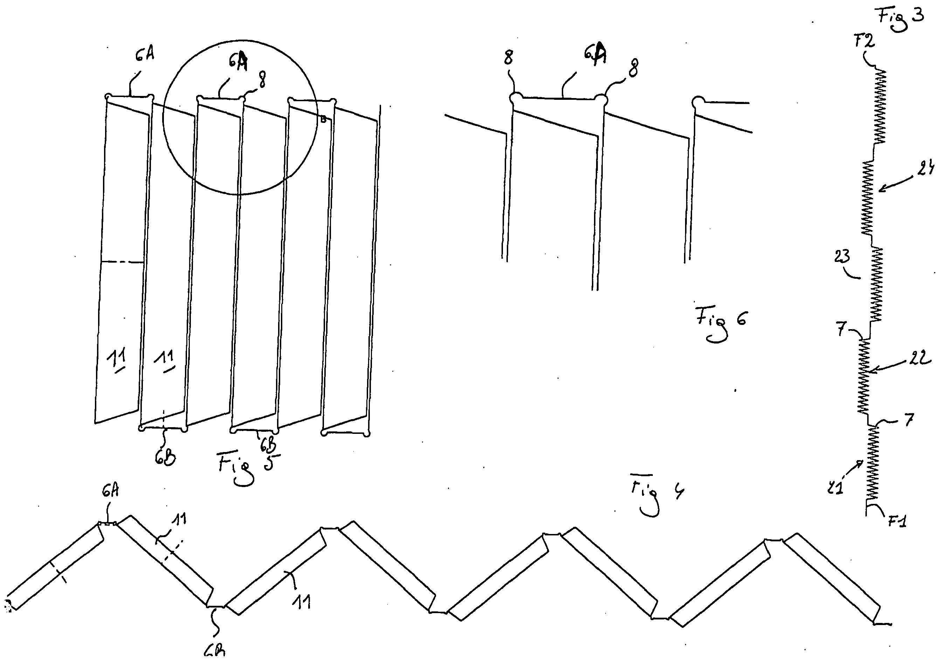

Ainsi que montré à la figure 3, les protubérances d'une première série de portions 21,23,... de la zone centrale 2 sont situées le long d'une première face F1, tandis que les protubérances 7 d'une deuxième série de portions 22,24,... de la zone centrale sont situées le long de la deuxième face F2 de la feuille, face opposée à la face F1. Les portions 22,24,... de la deuxième série sont situées respectivement entre deux portions (21,23 pour la portion 22, etc.) de la première série.

Lors du pliage de la feuille le long des diverses lignes de pliage 8 parallèles entre elles, les extrémités des protubérances 7 s'étendant depuis une face F1 ou F2 viennent en contact avec l'autre face F2 de la feuille 1. Par exemple l'extrémité libre 7E des protubérances 7 éloignée du plan de la face F1 vient en contact avec des bords 7B de renfoncements s'étendant dans le plan de la face F2. Par ce pliage, des passages distincts P1,P2, ... sont formés pour le gaz, chaque passage P1,P2 présentant une entrée E et une sortie formées entre deux portions intermédiaires 6B,6B successives le long d'une face du corps d'échange.

Une fois le pliage de la feuille terminée le long des lignes de pliage 8, les rabats 9 sont rabattus pour former une paroi le long des parois longitudinales perpendiculaires à la direction T.

Le passage P1 ou P2 est formé ainsi entre les protubérances de deux portions successives de la partie centrale 2, lesdites protubérances s'étendant dans des directions différentes, avantageusement inverse par rapport à la direction T des lignes de pliage. Ceci permet d'accroître la surface d'échange, la longueur du parcours du gaz et/ou la turbulence du flux, de manière à accroître l'échange thermique d'un fluide vers l'autre fluide.

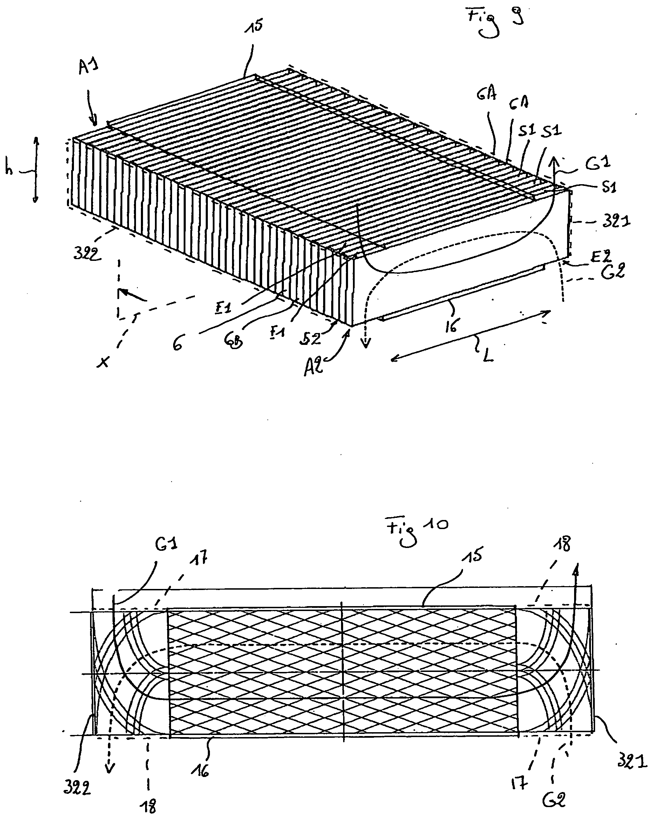

Après pliage et rabattement des rabats 9, on obtient ainsi un corps d'échange tel que représenté à la figure 9.

Pour renforcer la structure et améliorer l'écoulement des fluides, il est avantageux de munir le corps d'échange sur ces faces longitudinales A1,A2, d'un support 15,16 montré en traits interrompus, lesdits supports ayant une largeur L correspondant à la largeur (dans le sens de la direction T) de la zone centrale 2. Ces supports obturent une partie des passages formés entre des portions 6A ou 6B, de manière à définir d'une part une série d'entrées (El pour les passages P1, E2 pour les passages P2) et de sorties (SI pour les passages P1 et S2 pour les passages P2) pour les différents canaux.

Les protubérances courbes des parois latérales permettent de diriger le fluide vers un passage P1 ou P2 ou de diriger le fluide sortant d'un passage P1 ou P2.

Le corps d'échange de la figure 9 est ainsi un corps d'échange adapté pour le transfert de calorie d'un premier fluide gazeux G1 vers un deuxième fluide gazeux G2. Ledit corps d'échange 20 est formé par une feuille ou un film 1 plié en accordéon définissant une première série de portions pliées 6A, 6A, .. de la feuille ou film, une deuxième série de portions pliées 6B, 6B, ... de la feuille ou film, une série de parois d'échange transversales 21, 22, 23, ... sensiblement planes et sensiblement parallèles entre elles s'étendant chacune entre une portion pliée 6A, 6A, ... de la première série et une portion pliée 6B, 6B, ... de la deuxième série, ladite feuille pliée formant ainsi une première série de canaux P1 et une deuxième série de canaux P2 , lesdits canaux P1, P2 s'étendant transversalement (direction T) entre un premier bord extrême longitudinal B1 de la feuille plié (formée par la zone centrale 2 et les zones latérales 3A,3B), et un deuxième bord extrême longitudinal B2 de la feuille pliée opposé audit premier bord extrême longitudinal B1.
Le corps d'échange 20 est adapté pour être associé à :
- une première paroi longitudinale 321 (en traits interrompus) s'étendant le long du premier bord extrême longitudinal B1de la feuille, paroi formée par les rabats 9 ou par une paroi collée sur ces rabats 9,
- une deuxième paroi longitudinale 322 s'étendant le long du deuxième bord extrême longitudinal B2 de la feuille, paroi formée par les rabats 9 ou par un plat collé sur ces rabats 9,
- une troisième paroi 15 s'étendant le long de portions pliées 6A,6A de la première série, et
- une quatrième paroi 16 s'étendant le long de portions pliées 6B,6B de la deuxième sérié,
de manière à former un premier circuit constitué de canaux P1 de la première série pour une circulation du premier fluide G1 et un deuxième circuit constitué de canaux P2 de la deuxième série pour une circulation du deuxième fluide G2.
Les parois 15, 16, 321 et 322 permettent de rigidifier le corps d'échange, de manière à faciliter son placement dans une structure, en évitant un écrasement accidentel. Ces parois 15,16,321 et 322 sont avantageusement réalisées en un matériau présentant une faible conductivité thermique ou en un matériau isolant.

Dans le corps d'échange de la figure 9, les parois d'échange transversales 21,22,23, 24 sensiblement planes avec les protubérances présentent une épaisseur de moins de 0,3mm, par exemple comprise entre 0,01 mm et 0,2 mm, par exemple 20µm, 30µm, 50µm et sont réalisées en un matériau au moins résistant à la vapeur d'eau et à l'eau, et présentant une conductivité thermique moyenne de moins de 0,20 W/(m.K) dans le sens de la longueur de la paroi considérée.

Les parois d'échange transversale 21, 22, 23, ... présentent une hauteur h d'au moins 1 cm et une longueur L d'au moins 3cm, le rapport longueur / hauteur étant supérieur à 1,5, avantageusement inférieur à 5, de préférence compris entre 2 et 4, en particulier de manière plus préférentielle compris entre 2 et 3.

Les parois 21, 22, 23, ... présentent chacun au moins un renfoncement 7 adapté pour prendre appui sur une paroi adjacente ou sur un renforcement d'une paroi adjacente, de manière à former dans le canal ou passage P1 ou P2 entre lesdites parois adjacentes au moins un élément 7 guidant le fluide circulant dans ledit canal ou créant une turbulence du fluide circulant dans ledit canal P1 ou P2. Ledit élément (7) est adapté pour accroître la surface d'échange, la longueur du parcours du gaz et/ou la turbulence du flux, de manière à accroître l'échange thermique d'un fluide (G1) vers l'autre fluide (G2)

Les portions planes des parois adjacentes (par exemple 21,22) définissant un canal P1 sont distantes l'une de l'autre d'une distance d de moins de 6mm, par exemple comprise entre 3 et 5mm, cette distance correspondant à la largeur des portions intermédiaires 6A,6B,... Ces parois planes 21,22 sont par exemple définies par les arrêtes ou zones s'étendant sensiblement dans le plan des zones latérales adjacentes.

Le corps d'échange présente une densité surfacique de moins de 200g/m², une densité volumique apparente de moins de 100kg/m³, en particulier de 25g/m² à 100g/m² (par exemple d'environ 40 à 60g/m²), et une densité volumique de surface d'échange en m² de surface d'échange par unité de volume (m³) de plus de 750 m²/m³, par exemple comprise entre 700m²/m³ et 2000m²/m³, par exemple 750m²/m³, 1000 m²/m³, voire plus.

La feuille 1 peut comprendre des moyens pour accroître localement la conductivité thermique dans le sens de l'épaisseur de la paroi d'échange 21, 22, 23.... Ces moyens montrés en traits interrompus sont par exemple des zones locales 30 espacées les unes des autres, pour éviter la formation de pont thermique en particulier dans le sens transversal T. Pour ces zones locales 30, la conductivité thermique est par exemple supérieure à 100 W/(m.K).

Le corps d'échange de la figure 9 associé aux parois 321, 322 et 15 et 16 forme une cassette assurant un premier circuit constitué de canaux P1 de la première série pour une circulation du premier fluide et un deuxième circuit constitué de canaux P2 de la deuxième série pour une circulation du deuxième fluide,
les parois 15 et 16 définissant des ouvertures longitudinales permettant au premier fluide de rentrer dans la première série de canaux P1 du corps d'échange et d'en sortir, et permettant au deuxième fluide de rentrer dans la deuxième série de canaux P2 du corps d'échange et d'en sortir.

Avantageusement, une ou des ouvertures de la cassette sont associées à un grillage et/ou à un élément filtrant, montré en traits interrompus 17, 18. Par exemple, l'élément 17 est adapté pour arrêter l'entrée de poussières ou particules dans le corps d'échange, tandis que l'élément 18 est adapté pour empêcher le passage d'insectes ou de rongeurs dans le corps, mais adapté pour laisser passer d'éventuelles poussières présentes dans le corps d'échange. L'élément 17 et/ou 18 est/sont avantageusement associé(s) à la paroi 15, 16 avant le montage de la paroi 15,16 sur le corps d'échange.

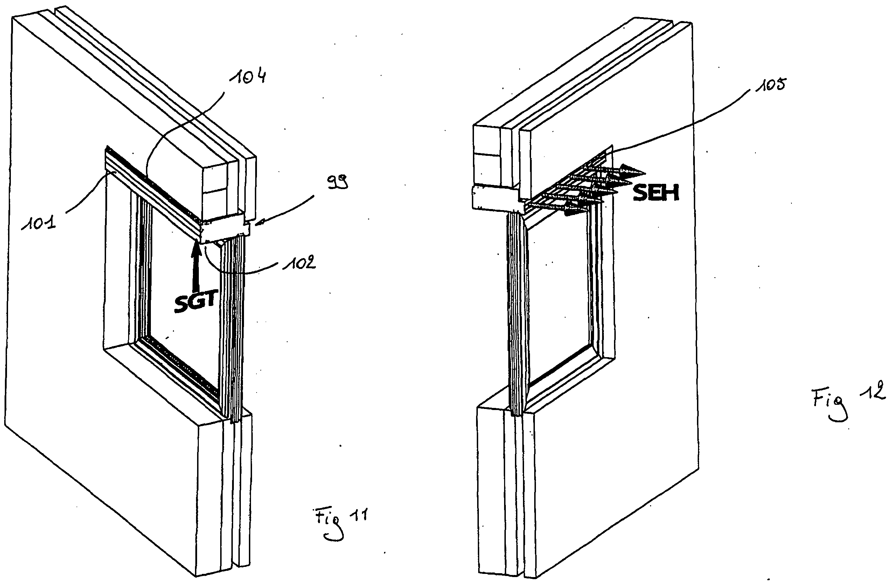

Les figures 11 et 12 sont des vues partielles d'un échangeur de chaleur utilisant un corps d'échange selon l'invention, par exemple sous la forme d'une cassette selon la figure 9.

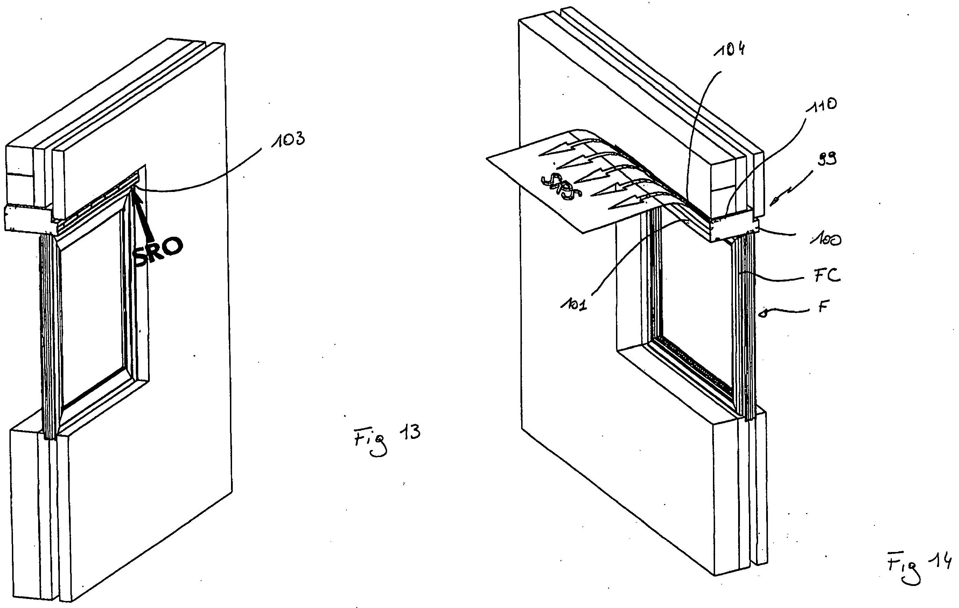

Les figures 11 à 14 montrent une fenêtre F associé à un échangeur de chaleur 99 selon l'invention.
Dans ces figures, la flèche SGT représente la direction d'aspiration d'air du local (air vicié) à évacuer vers l'extérieur (flèche SEH) après son passage par l'échangeur de chaleur. La flèche SRO désigne le flux d'air frais extérieur entrant dans l'échangeur, tandis que la flèche SRS désigne le flux d'air frais sortant de l'échangeur dans le local L.

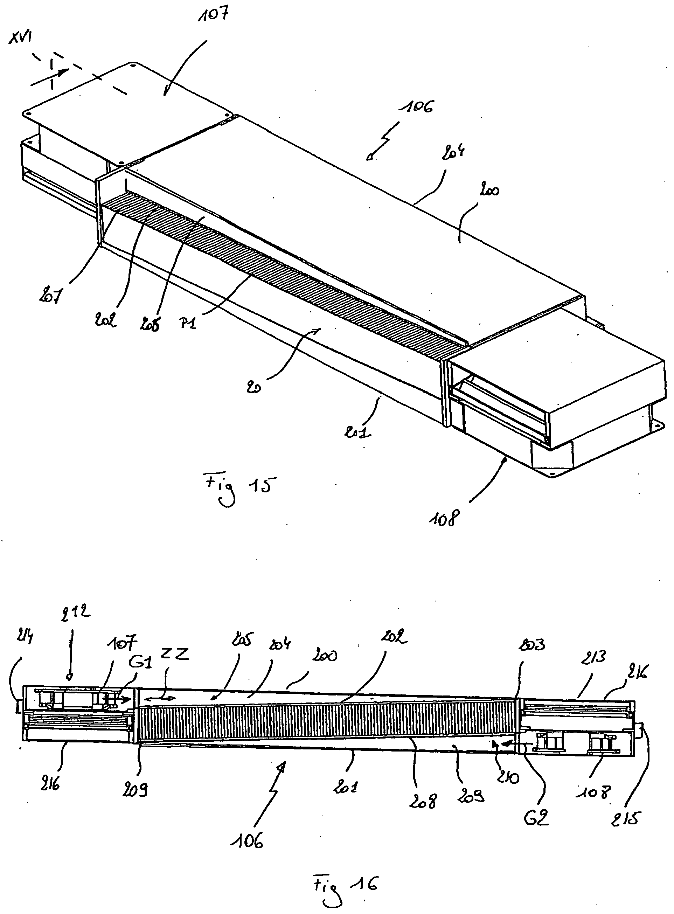

Cet échangeur 99 comporte à titre d'exemple :
- un support 100 avec une paroi intérieure 101 mobile entre une position ouverte et une position fermée, ce support définissant une chambre intérieure 100bis présentant une première ouverture 102 communiquant avec le local (pour le passage d'air vicié du local), une deuxième ouverture 103 communiquant avec le milieu extérieur pour le passage d'air frais extérieur, une fente 104 pour le passage d'air de la chambre vers le local, et une série d'ouvertures distinctes 105 pour le passage d'air vicié SEH de la chambre vers l'extérieur ; et
- une cassette amovible 106 (voir figure 15) adaptée à coulisser dans la chambre intérieure du support 100.
L'échangeur est disposé au dessus du châssis FC d'une fenêtre F.

Ladite cassette 106, une fois placée (par exemple par glissement) dans le support 100 et les connexions électriques assurées pour les ventilateurs, est adaptée pour former un premier circuit constitué de canaux P1 de la première série pour une circulation du premier fluide (air frais aspiré par le premier ventilateur 107 via l'ouverture 103 située le long d'un côté du support 100 tourné vers l'extérieur - flèche SRO, le ventilateur 107 poussant cet air frais dans les canaux P1, l'air frais sortant ensuite de l'échangeur 99 par la fente 104 pour former un flux ou lame d'air frais SRS à un niveau situé au dessus du châssis FC de la fenêtre F) et un deuxième circuit constitué de canaux P2 de la deuxième série pour une circulation du deuxième fluide (G2, Air vicié), l'air vicié de la chambre étant aspiré par le ventilateur 108 pour être poussé dans les canaux P2 de la deuxième série du corps d'échange 20, pour ressortir du corps d'échange et ensuite de la cassette vers le milieu extérieur par les ouvertures distinctes 105.

La cassette comprend :
- une paroi supérieure 200,
- une paroi inférieure 201 parallèle à la paroi supérieure,
- une paroi inclinée 202 (angle de 5° par rapport au plan de la paroi supérieure 200) adjacente de la paroi supérieure 200 et présentant un bord 203 en contact avec la paroi supérieure 200, cette paroi inclinée 202 ayant une largeur inférieure à la largeur du corps d'échange 20 et étant adaptée pour assurer que des canaux du corps d'échange 20 tournés vers le haut présentent chacun une ouverture le long de chacun des bords latéraux du corps d'échange,
- une paroi 206 et une paroi 204 s'étendant respectivement entre la paroi inclinée 202 et la paroi supérieure 200, et entre la paroi supérieure 200 et la paroi inférieure 201, ladite paroi 204 étant adaptée pour être en contact avec une face latérale 322 du corps d'échange 20 (avec par exemple interposition d'un système ou joint d'étanchéité), de manière à former une chambre de distribution 205 de l'air provenant du ventilateur 107 pour le répartir dans les canaux P1 du corps d'échange, l'air sortant des canaux P1 sort dans une chambre 207 formée entre la paroi amovible ou mobile 101 (en position fermée) du support de l'échangeur et une paroi supérieure 110 du support de l'échangeur (avantageusement un système ou joint d'étanchéité 400 s'étend entre un bord latéral 322 du corps d'échange 20 et la paroi amovible ou mobile 101 (en position fermée de celle-ci) ;
- une paroi inclinée 208 parallèle à la paroi 202 et dont un bord 209 touche la paroi inférieure 201, cette paroi inclinée 208 ayant une largeur inférieure à la largeur du corps d'échange 20 et étant adaptée pour assurer que des canaux du corps d'échange 20 tournés vers le bas présentent chacun une ouverture le long de chacun des bords latéraux 321,322 du corps d'échange 20,
- une paroi 209 s'étendant entre la paroi inclinée 208 et la paroi inférieure 201, de manière à former une chambre de distribution 210 de l'air provenant du ventilateur 108 pour le répartir dans les canaux P2 du corps d'échange, l'air sortant des canaux P2 sort dans une chambre 211 formée entre la paroi 204 et la paroi 209, la paroi 204 présentant une ou une série d'ouvertures 105 pour l'évacuation vers l'extérieur de l'air vicié (dans la forme de réalisation la chambre 211 présente une fente 221bis pour le passage de l'air vicié vers une chambre du support présentant une paroi tournée vers l'extérieur avec une série d'ouvertures 105 recouvertes d'un grillage 105bis) ;
- une section 212 définissant une chambre recevant le ventilateur 107 pour générer une circulation du fluide G1 vers la chambre de distribution 205,
- une section 213 définissant une chambre recevant le ventilateur 108 pour générer la circulation de l'air vicié G2 vers la chambre de distribution 210, et
- des connexions électriques rapides (par exemple du type mâle / femelle) 214,215 pour assurer une la connexion des ventilateurs à un circuit électrique, ces connexions étant adaptées pour éviter un fonctionnement des ventilateurs en cas de non placement correct de la cassette sur le support.

Puisque les sections 212,213 font partie intégrante de la cassette, il est possible d'assurer un passage de tout le courant d'air provenant d'un ventilateur vers une chambre de distribution.

La chambre de distribution 205 est adaptée pour qu'au moins pour 75% des canaux P1 de la première série, avantageusement au moins 85% des canaux de la première série, de préférence au moins 95% des canaux de la première série, le débit de fluide (exprimé en litre par minute) passant dans un canal P1 est compris entre 85% et 115% du débit moyen de fluide passant dans un canal P1 des canaux de la première série, ledit débit moyen étant égal au débit total de fluide passant par tous lesdits canaux divisé par le nombre de canaux.
Par exemple, ladite première chambre de distribution comporte une portion longitudinale avec une ouverture longitudinale pour amener le premier fluide de la chambre 205 vers les canaux P1 de la première série, ladite portion longitudinale de la chambre de distribution présentante par exemple une section de passage mesurée dans un plan perpendiculaire à la direction longitudinale (ZZ) qui est variable. Ladite portion longitudinale de la chambre de distribution présente une première extrémité adjacente de l'ouverture communiquant avec le ventilateur 107 poussant le premier fluide G1 dans la chambre de distribution 205, et une deuxième extrémité (adjacente du bord 203) opposée à ladite première extrémité, la section de passage de la portion longitudinale de la chambre de distribution 205 variant de manière sensiblement continue entre une première section de passage adjacente de la première extrémité et une deuxième section de passage adjacente de la deuxième extrémité.

Ladite deuxième chambre de distribution 210 est avantageusement adaptée pour qu'au moins pour 75% des canaux de la deuxième série, avantageusement au moins 85% des canaux de la deuxième série, de préférence au moins 95% des canaux de la deuxième série, le débit de deuxième fluide (exprimé en litre par minute) passant dans un canal est compris entre 75% et 125%, de préférence entre 85% et 115% du débit moyen de deuxième fluide G2 passant dans un canal P2 des canaux de la deuxième série, ledit débit moyen étant égal au débit total de fluide passant par tous lesdits canaux P2 divisé par le nombre de canaux P2 de la deuxième série.
Par exemple, ladite deuxième chambre de distribution 210 comporte une portion longitudinale avec une ouverture longitudinale pour amener le deuxième fluide G2 de la chambre de distribution 210 vers les canaux P2 de la deuxième série, ladite portion longitudinale de la deuxième chambre de distribution présentant par exemple une section de passage mesurée dans un plan perpendiculaire à la direction longitudinale (ZZ) qui est variable. Ladite portion longitudinale de la deuxième chambre de distribution 210 présente une première extrémité adjacente de l'ouverture communiquant avec le ventilateur 108 poussant le deuxième fluide G2 dans la chambre 210, et une deuxième extrémité (adjacente du bord 209) opposée à ladite première extrémité, la section de passage de la portion longitudinale variant de manière sensiblement continue entre une première section de passage adjacente de la première extrémité et une deuxième section de passage adjacente de la deuxième extrémité.

Dans la forme de réalisation représentée, l'échangeur est un échangeur où les fluides s'écoulent à contre-courant. Le débit de fluides G1,G2 s'écoulant à contre-courant est contrôlé par les ventilateurs 107,108. Ces débits peuvent être identiques ou différents, avantageusement différents. Les ventilateurs 107,108 sont par exemple mis en rotation au moyen de moteur assurant une vitesse de rotation variant en fonction de l'alimentation électrique.

Les différentes ouvertures de la cassette sont avantageusement munies ou associées d'un grillage ou d'une grille dont la taille des passages est adaptée pour éviter le passage d'un doigt.

Il est également avantageux de prévoir dans les sections 212,213 un filtre 216 adapté pour éviter le passage de poussières ou particules dans le ventilateur 107,108, ainsi que dans les canaux P1,P2 du corps d'échange 20.

Le fonctionnement des ventilateurs est avantageusement contrôlé par un système de sécurité indiquant ou envoyant un signal d'alarme si la puissance du ventilateur utilisée est trop importante (par exemple dû à un bouchage d'un ou des filtres 216.

Par l'utilisation d'une porte 101 mobile ou amovible (par exemple articulée), qui une fois ouverte ou enlevée, il est possible d'avoir un accès aisé au moins au corps d'échange, et/ou aux ventilateurs 107,108. La cassette peut facilement être retirée de son support, pour permettre à un opérateur de pouvoir y travailler sur une table de travail, ou pour permettre à un opérateur de pouvoir remplacer une cassette par une autre cassette. L'ouverture de cette porte 101 est avantageusement associée à une sécurité interrompant l'amenée de courant électrique vers les ventilateurs.

L'échangeur est par exemple placé au-dessus du châssis d'une fenêtre F. Eventuellement, le boîtier comprend un ou des grillages ou éléments filtrants pour la ou les ouvertures du boîtier et/ou situés dans les canaux de la chambre du boîtier. Dans ce cas, le corps d'échange ou la cassette peut ne pas être muni d'un élément filtrant ou d'un grillage.

L'utilisation d'un échangeur représenté aux figures a montré qu'il était possible de transmettre une grande quantité de chaleur de l'air vicié (G2) sortant d'une chambre (air présentant par exemple une température de 20 à 25°C) à l'air extérieur froid G1 (air présentant par exemple une température de 5°C).
L'air frais G1, lors de son passage dans le corps d'échange 99, se réchauffe pour atteindre une température comprise entre 15 et 20°C. L'air vicié G2 se refroidit lors de son passage dans le corps d'échange pour atteindre une température entre 7 et 12°C. Lors de ce refroidissement, une partie de l'humidité contenue dans l'air vicié se condense ou peux se condenser sur les parois des canaux P2, cette eau de condensation est poussée dans la gouttière 211 (munie d'un conduit d'évacuation non montré). Cette condensation permet encore de mieux récupérer l'énergie contenue dans l'air vicié pour le transférer à l'air frais. Le corps d'échange 20 permet de plus de réduire le transfert thermique par conduction par les parois du corps d'échange entre la face tournée vers l'extérieur et la face tournée vers l'intérieur, tout en assurant une bonne conduction thermique dans la direction perpendiculaire aux parois d'échange. Les ouvertures 105 sont situées avantageusement à un niveau supérieur du fond de la gouttière 211 pour éviter le passage d'eau liquide par les ouvertures 105. La gouttière 211 est avantageusement inclinée par rapport à un plan horizontal pour diriger l'eau de condensation vers une extrémité de la gouttière associée au conduit d'évacuation.

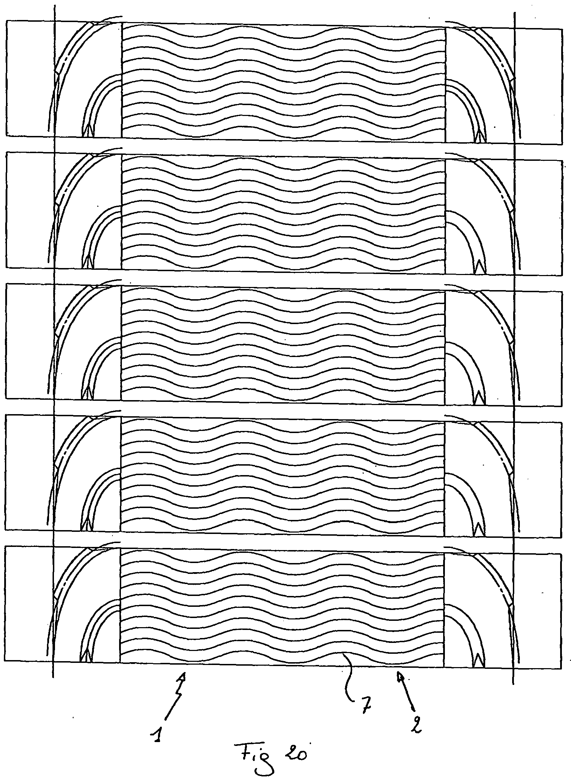

La figure 20 est une vue d'une feuille similaire à celle de la figure 1, si ce n'est que les protubérances et renfoncements 7 suivent un chemin sinusoïdal dans la partie centrale 2 de la feuille 1,

## Revendications

1. Corps d'échange (20) pour le transfert de calorie d'un premier fluide gazeux (G1) vers un deuxième fluide gazeux (G2), ledit corps d'échange étant formé par une feuille (1) ou un film plié ou courbé en accordéon définissant une première série de portions courbes ou pliées (6A) de la feuille ou film (1), une deuxième série de portions courbes ou pliées (6B) de la feuille ou film (1), une série de parois d'échange transversales (21,22,23) sensiblement planes et sensiblement parallèles entre elles s'étendant chacune entre une portion courbe ou pliée (6A) de la première série et une portion courbe ou pliée de la deuxième série, ladite feuille ou film plié ou courbé (6B) formant ainsi une première série de canaux (C1) et une deuxième série de canaux (C2), lesdits canaux s'étendant transversalement entre un premier bord extrême longitudinal (B1) de la feuille ou du film plié ou courbé, et un deuxième bord extrême longitudinal (B2) de la feuille ou du film plié ou courbé opposé audit premier bord extrême longitudinal (B1),
le corps d'échange étant adapté pour être associé à :
- une première paroi longitudinale (321) s'étendant le long du premier bord extrême longitudinal (B1) de la feuille ou du film (1),
- une deuxième paroi longitudinale (322) s'étendant le long du deuxième bord extrême longitudinal (B2) de la feuille ou du film (1),
- une troisième paroi (15) s'étendant le long d'au moins un bord ou une arrête des portions courbes ou pliées (6A) de la première série, et
- une quatrième paroi (16) s'étendant le long d'au moins un bord ou une arrête des portions courbes ou pliées (6B) de la deuxième série,
de manière à former un premier circuit constitué de canaux (P1) de la première série pour une circulation du premier fluide (G1) et un deuxième circuit constitué de canaux (P2) de la deuxième série pour une circulation du deuxième fluide (G2), ledit corps d'échange étant essentiellement **caractérisé**
**en ce que** les parois d'échange transversales (21,22,23) sensiblement planes présentent une épaisseur de moins de 0,5mm, avantageusement moins de 0,3mm, de préférence une épaisseur comprise entre 0,05mm et 0,1mm,
**en ce que** les patois d'échange transversales (21,22,23) sensiblement planes, avantageusement sensiblement parallèles entre elles) sont réalisées en un matériau au moins résistant à la vapeur d'eau et à l'eau, et présentant une conductivité thermique moyenne de moins de 0,25 W/(m.K), en particulier de moins de 0,20 W/(m.K) dans le sens de la longueur de la paroi d'échange considérée,
**en ce que** les parois d'échange transversales (21,22,23) présentent une hauteur d'au moins 1 cm et une longueur d'au moins 3cm, le rapport longueur / hauteur étant supérieur à 1,5, avantageusement inférieur à 5, de préférence compris entre 2 et 4, en particulier compris entre 2 et 3 ;
**en ce que** les parois (21,22,23) présentent chacune au moins un renfoncement (7) adapté pour prendre appui sur une paroi adjacente ou sur un renforcement d'une paroi adjacente, de manière à former dans le canal (P1,P2) entre lesdites parois adjacentes au moins un élément (7) guidant le fluide circulant dans ledit canal, ledit élément (7) étant adapté pour accroître la surface d'échange, la longueur du parcours du gaz et/ou la turbulence du flux, de manière à accroître l'échange thermique d'un fluide (G1) vers l'autre fluide (G2), et
**en ce que** les portions planes (21,22) des parois adjacentes définissant un canal (P1) sont distantes l'une de l'autre d'une distance de moins de 8mm, avantageusement de moins de 6mm.

2. Corps d'échange selon la revendication 1, **caractérisé en ce qu'**il présente une densité surfacique de moins de 500g/m², avantageusement de moins de 300g/m², de préférence de moins de 200g/m², plus spécifiquement de moins de 100g/m², en particulier comprise entre 25g/m² et 100g/m², et une densité volumique apparente de moins de 250kg/m³, avantageusement de moins de 150kg/m³, de préférence de moins de 100 kg/m³, plus spécifiquement comprise entre 25 kg/m³ et 75kg/m³.

3. Corps d'échange selon la revendication 1 ou 2, **caractérisé en ce qu'**il présente une densité de surface en m² de surface d'échange / m³ de plus de 400m²/m³, avantageusement de plus de 500m²/m³, de préférence de plus de 600 m²/m³.

4. Corps d'échange selon l'une des revendications précédentes, **caractérisé en ce que** les parois d'échange (21,22,23) du corps d'échange sont réalisées en papier, avantageusement recouvert d'une couche de protection, en matière plastique, en matériau composite, en matériaux fibreux, en tissus imprégnés, ou en une combinaison de tels matériaux, ou en un matériau présentant une structure sous forme de film ou couche comprenant une ou des zones (30) présentant une conductivité thermique supérieure à 10 W/(m.K), avantageusement supérieure à 100 W/(m.K).

5. Corps d'échange suivant l'une des revendications 1 à 4, **caractérisé en ce que** les parois (21,22,23) présentent sur leurs deux faces sensiblement planes un ou des renfoncements (7), un ou des renfoncements d'une première face prenant appui sur une face d'une première paroi adjacente ou un renfoncement d'une face d'une première paroi adjacente, tandis que un ou des renfoncements de la deuxième face prend appui sur une face d'une deuxième paroi adjacente ou un renfoncement d'une deuxième paroi adjacente.

6. Corps d'échange suivant la revendication 5, **caractérisé en ce que** les renfoncements (7) des parois sensiblement planes (21,22,23) s'étendent sensiblement sur au moins 50% de la longueur transversale des parois, le long d'un axe incliné par rapport à la direction transversale des parois avec un angle compris entre 1° et 45°, avantageusement compris entre 3° et 30° par rapport à la direction transversale (T) des parois (21,22,23),

7. Corps d'échange suivant l'une des revendications 5 et 6, **caractérisé en ce que** chaque paroi (21,22,23) du corps d'échange présente sur chacune de ses faces une série de renfoncements (7) s'étendant le long d'un axe formant un angle compris entre 1°et 45°, avantageusement entre 3° et 30°, de préférence entre 5° et 25° par rapport à la direction transversale de la paroi considérée, et **en ce que** les renfoncements de deux parois adjacentes sont agencés de manière à ce que des renfoncements d'une première paroi prennent appui sur des renfoncements de la deuxième paroi en un ou des points ou zones distants l'un de l'autre.

8. Cassette (106) comprenant au moins :
- un corps d'échange (20) selon l'une quelconque des revendications 1 à 7;
- avantageusement une première paroi longitudinale (321), avantageusement mobile ou amovible, s'étendant le long du premier bord extrême longitudinal (B1) de la feuille ou du film,
- avantageusement une deuxième paroi longitudinale (322), avantageusement mobile ou amovible, s'étendant le long du deuxième bord extrême longitudinal (B2) de la feuille ou du film,
- une troisième paroi (15) s'étendant le long d'au moins un bord ou arrête des portions courbes ou pliées (6A) de la première série, et
- une quatrième paroi (16) s'étendant le long d'au moins un bord ou une arrête des portions courbes ou pliées (6B) de la deuxième série,
lesdites première, deuxième, troisième et quatrième parois formant un premier circuit constitué de canaux (P1) de la première série pour une circulation du premier fluide (G1) et un deuxième circuit constitué de canaux (P2) de la deuxième série pour une circulation du deuxième fluide (G2),
des ouvertures étant présentes pour permettre au premier fluide de rentrer dans la première série de canaux (C1) du corps d'échange et d'en sortir, tandis que des ouvertures sont présentes pour permettre au deuxième fluide de rentrer dans la deuxième série de canaux du corps d'échange et d'en sortir,
les troisième et quatrième parois (321,322), avantageusement sensiblement parallèles entre elles, ne recouvrant que partiellement le bord ou arrête des portions courbes ou pliées (6A,6B) respectivement de la première série et de la deuxième série, de manière à définir deux zones ouvertes séparées par la troisième paroi définissant une entrée et une sortie pour les canaux de la première série, et deux autre zones ouvertes séparées par la quatrième paroi définissant une entrée et une sortie pour les canaux de la deuxième série.

9. Cassette suivant la revendication 8, **caractérisée en ce qu'**une ou des ouvertures sont associées à un grillage et/ou à un élément filtrant (17,18).

10. Cassette suivant l'une des revendications 8 à 9, **caractérisée en ce que** la cassette comprend un ou des moyens (214,215) empêchant le fonctionnement du premier et/ou deuxième moyen mécanique, en cas de positionnement incorrect de la cassette par rapport à un support (100) d'un ensemble destiné à former avec la cassette un échangeur de chaleur (99).

11. Echangeur de chaleur (99) comportant au moins :
- un support (100) ;
- un corps d'échange (20) selon l'une des revendications 1 à 7 porté par ledit support (100);
- une première paroi longitudinale (321) s'étendant le long du premier bord extrême longitudinal (B1) de la feuille ou du film,
- une deuxième paroi longitudinale (322) s'étendant le long du deuxième bord extrême longitudinal (B2) de la feuille ou du film,
- une troisième paroi (15) s'étendant le long d'au moins un bord ou une arrête de portions courbes ou pliées (6A) de la première série, et
- une quatrième paroi (16) s'étendant le long d'au moins un bord ou une arrête de portions courbes ou pliées (6B) de la deuxième série,
lesdites première, deuxième, troisième et quatrième parois formant un premier circuit (P1) constitué de canaux de la première série pour une circulation du premier fluide (G1) et un deuxième circuit (P2) constitué de canaux de la deuxième série pour une circulation du deuxième fluide (G2),
ledit corps d'échange et lesdites première, deuxième, troisième et quatrième parois formant avantageusement une cassette selon l'une des revendications 8 à 10,
- un premier moyen mécanique (107) pour générer une circulation du premier fluide dans le premier circuit, et
- un deuxième moyen mécanique (108) pour générer une circulation du deuxième fluide dans le deuxième circuit.

12. Echangeur suivant la revendication 11, **caractérisé en ce que** le premier moyen mécanique (107) est adapté pour pousser le premier fluide dans une première chambre de distribution (205), ladite première chambre de distribution (205) présentant une ouverture pour recevoir le premier fluide provenant du premier moyen mécanique (107) et une ouverture ou série d'ouvertures communiquant avec une série de passage d'entrée vers des canaux (P1) de la première série formant le premier circuit (C1), ladite première chambre de distribution (205) étant avantageusement adaptée pour qu'au moins pour 75% des canaux (P1) de la première série, avantageusement au moins 85% des canaux de la première série, de préférence au moins 95% des canaux de la première série, le débit de fluide (exprimé en litre par minute) passant dans un canal est compris entre 50% et 150%, avantageusement entre 75% et 125%, de préférence entre 85% et 115% du débit moyen de fluide passant dans un canal des canaux de la première série, ledit débit moyen étant égal au débit total de fluide passant par tous lesdits canaux divisé par le nombre de canaux de la dite première série.

13. Echangeur suivant la revendication 12, **caractérisé en ce que** le deuxième moyen mécanique (108) est adapté pour pousser le deuxième fluide (G2) dans une deuxième chambre de distribution (210), ladite deuxième chambre de distribution (210) présentant une ouverture pour recevoir le deuxième fluide (G2) provenant du deuxième moyen mécanique (108) et une ouverture ou série d'ouvertures communiquant avec une série de passage d'entrée vers des canaux (P2) de la deuxième série formant le deuxième circuit, ladite deuxième chambre de distribution étant avantageusement adaptée pour qu'au moins pour 75% des canaux de la deuxième série, avantageusement au moins 85% des canaux de la deuxième série, de préférence au moins 95% des canaux de la deuxième série, le débit de deuxième fluide (exprimé en litre par minute) passant dans un canal est compris entre 50% et 150%, avantageusement entre 75% et 125%, de préférence entre 85% et 115% du débit moyen de deuxième fluide passant dans un canal des canaux de la deuxième série, ledit débit moyen étant égal au débit total de fluide passant par tous lesdits canaux divisé par le nombre de canaux de la deuxième série.

14. Echangeur suivant l'une des revendications 11 à 13, **caractérisé en ce que** le corps d'échange (20) a une forme sensiblement parallélépipèdique, et est logé, avantageusement de manière amovible, dans une chambre (106) sensiblement parallélépipèdique présentant une paroi inférieure (201) et une paroi supérieure (202) sensiblement parallèles entre elles,
**en ce que** le corps d'échange (20) présente une face supérieure (15) avec des passages pour une série de canaux (P1) et une face inférieure (16) avec des passages pour l'autre série de canaux (P2), lesdites faces inférieure et supérieure étant sensiblement parallèles entre elles, les faces inférieure (16) et supérieure (15) du corps d'échange étant inclinées respectivement par rapport à la paroi inférieure (201) et la paroi supérieure (202) de la chambre, de manière à définir une chambre de distribution inférieure (205) et une chambre de distribution supérieure (209), et
**en ce que** l'inclinaison entre la face inférieure (16) du corps d'échange (20) et la paroi inférieure (201) de la chambre est par exemple comprise entre 1° et 20°, avantageusement entre 2° et 10°, tandis que l'inclinaison entre la face supérieure (15) du corps d'échange (20) et la paroi supérieure (200) de la chambre est par exemple comprise entre 1° et 20°, avantageusement entre 2° et 10°.

15. Echangeur suivant l'une quelconque des revendications 11 à 14, **caractérisé en ce que** l'échangeur (99) comporte un boîtier (106) présentant :
- une première ouverture (103) ou série de premières ouvertures pour l'amenée du premier fluide (G1) vers le premier moyen mécanique (107) poussant ledit premier fluide (G1) dans des canaux (P1) de la première série du corps d'échange (20),
- une deuxième ouverture (104) ou série de deuxièmes ouvertures pour l'évacuation du premier fluide (G1) après son passage dans la première série de canaux (P1) du corps d'échange (20),
- une troisième ouverture (102) ou série de troisièmes ouvertures pour l'entrée du deuxième fluide (G2) vers le deuxième moyen mécanique (108), poussant ledit deuxième fluide dans des canaux (P2) de la deuxième série du corps d'échange, et
- une quatrième ouverture (105) ou série de quatrièmes ouvertures pour évacuer hors du boîtier (106) le deuxième fluide (G2) sortant de la deuxième série de canaux (P2), dans lequel lesdites ouvertures sont distinctes l'une de l'autre, et
**en ce que** le boîtier (106) comprend au moins une porte (101) mobile ou amovible, qui une fois ouverte ou enlevée permet un accès au moins au corps d'échange (20) et/ou éléments filtrants (17,18), éventuellement après enlèvement de la troisième ou quatrième paroi.

16. Echangeur suivant l'une quelconque des revendications 11 à 15, **caractérisé en ce que** l'échangeur (99) comporte un boîtier (106) présentant :
- une première ouverture (103) ou série de premières ouvertures pour l'amenée du premier fluide (G1) vers le premier moyen mécanique (107) poussant ledit premier fluide (G1) dans des canaux (P1) de la première série du corps d'échange (20),
- une deuxième ouverture (104) ou série de deuxièmes ouvertures pour l'évacuation du premier fluide (G1) après son passage dans la première série de canaux (P1) du corps d'échange (20),
- une troisième ouverture (102) ou série de troisièmes ouvertures pour l'entrée du deuxième fluide (G2) vers le deuxième moyen mécanique (108), poussant ledit deuxième fluide dans des canaux (P2) de la deuxième série du corps d'échange, et
- une quatrième ouverture (105) ou série de quatrièmes ouvertures pour évacuer hors du boîtier (100) le deuxième fluide (G2) sortant de la deuxième série de canaux (P2), dans lequel lesdites ouvertures sont distinctes l'une de l'autre, et
**en ce que** le boîtier (106) comporte un logement (212) dans lequel est placé ou monté le premier moyen mécanique (107) et/ou un logement (213) dans lequel est placé ou monté le deuxième moyen mécanique (108), le boîtier (100)comportant avantageusement un système de connexion (214,215) permettant l'alimentation du premier moyen mécanique (107) et/ou deuxième moyen mécanique (108) monté sur le boîtier, lorsque le boîtier (106) est placé correctement sur le support (100) d'un dispositif destiné à former un échangeur de chaleur, ledit système de connexion (214,215) empêchant l'alimentation en énergie du premier et/ou deuxième moyen mécanique (107,108) en cas de placement incorrect du boîtier (106) sur le support ou dans l'échangeur.

## Patentansprüche

1. Austauschkörper (20) für die Übertragung von Wärme von einem ersten gasförmigen Fluid (G1) zu einem zweiten gasförmigen Fluid (G2), wobei der Austauschkörper durch ein Blatt (1) oder ein Film gebildet ist, das bzw. der akkordeonförmig gefaltet oder gekrümmt ist und eine erste Reihe gekrümmter Abschnitte oder Falten (6A) des Blatts oder des Films (1), eine zweite Reihe von gekrümmten Abschnitten oder Falten (6B) des Blatts oder Films (1), und eine Reihe von transversalen Austauschwänden (21, 22, 23), die im Wesentlichen eben und im Wesentlichen zueinander parallel sind und sich jeweils zwischen einem gekrümmten oder gefalteten Abschnitt (6A) der ersten Reihe und einem gekrümmten oder gefalteten Abschnitt der zweiten Reihe erstrecken, definieren, wobei somit das Blatt oder der Film, das bzw. der gefaltet oder gekrümmt (6B) ist, eine erste Reihe von Kanälen (C1) und eine zweite Reihe von Kanälen (C2) bildet, wobei sich die Kanäle transversal zwischen einem ersten longitudinalen äußersten Rand (B1) des gefalteten oder gekrümmten Blatts oder Films und einem zweiten longitudinalen äußersten Rand (B2) des gefalteten oder gekrümmten Blatts oder Films, der sich gegenüber dem ersten longitudinalen äußersten Rand (B1) befindet, erstrecken,
wobei der Austauschkörper dafür ausgelegt ist, dass ihm Folgendes zugeordnet ist:
- eine erste longitudinale Wand (321), die sich längs des ersten longitudinalen äußersten Randes (B1) des Blatts oder Films (1) erstreckt,
- eine zweite longitudinale Wand (322), die sich längs des zweiten longitudinalen äußersten Randes (B2) des Blatts oder Films (1) erstreckt,
- eine dritte Wand (15), die sich längs wenigstens eines Randes oder einer Kante der gekrümmten oder gefalteten Abschnitte (6A) der ersten Reihe erstreckt, und
- eine vierte Wand (16), die sich längs wenigstens eines Randes oder einer Kante der gekrümmten oder gefalteten Abschnitte (6B) der zweiten Reihe erstreckt,
derart, dass ein erster Kreis, der durch Kanäle (P1) der ersten Reihe für eine Zirkulation des ersten Fluids (G1) gebildet ist, und ein zweiter Kreis, der durch Kanäle (P2) der zweiten Reihe für eine Zirkulation des zweiten Fluids (G2) gebildet ist, gebildet sind,
wobei der Austauschkörper im Wesentlichen **dadurch gekennzeichnet ist, dass** die im Wesentlichen ebenen transversalen Austauschwände (21, 22, 23) eine Dicke von weniger als 0,5 mm, vorteilhaft weniger als 0,3 mm und vorzugsweise im Bereich von 0,05 mm bis 0,1 mm aufweisen,
dass die im Wesentlichen ebenen transversalen Austauschwände, die vorteilhaft im Wesentlichen zueinander parallel sind, aus einem Material verwirklicht sind, das wenigstens gegenüber Wasserdampf und Wasser beständig ist und in Richtung der Länge der betrachteten Austauschwand eine mittlere Wärmeleitfähigkeit von weniger als 0,25 W/(m · K), insbesondere weniger als 0,2 W/(m · K), aufweisen,
dass die transversalen Austauschwände (21, 22, 23) eine Höhe von wenigstens 1 cm und eine Länge von wenigstens 3 cm aufweisen, wobei das Längen/Höhen-Verhältnis größer als 1,5 und vorteilhaft kleiner als 5 ist und vorzugsweise im Bereich von 2 bis 4 und insbesondere im Bereich von 2 bis 3 liegt;
dass die Wände (21, 22, 23) jeweils wenigstens eine Verstärkung (7) aufweisen, die dafür ausgelegt ist, sich auf einer benachbarten Wand oder auf einer Verstärkung einer benachbarten Wand abzustützen, derart, dass in dem Kanal (P1, P2) zwischen den benachbarten Wänden wenigstens ein Element (7) gebildet wird, das das in den Kanal zirkulierende Fluid führt, wobei das Element (7) dafür ausgelegt ist, die Austauschoberfläche, die Durchlauflänge des Gases und/oder die Turbulenz des Flusses zu erhöhen, derart, dass der Wärmeaustausch eines Fluids (G1) an das andere Fluid (G2) erhöht wird, und
dass die ebenen Abschnitte (21, 22) benachbarter Wände, die einen Kanal (P1) definieren, voneinander um eine Strecke von weniger als 8 mm, vorteilhaft weniger als 6 mm, beabstandet sind.

2. Austauschkörper nach Anspruch 1, **dadurch gekennzeichnet, dass** er eine Oberflächendichte von weniger als 500 g/m², vorteilhaft weniger als 300 g/m², vorzugsweise weniger als 200 g/m², genauer weniger als 100 g/m² und insbesondere im Bereich von 25 g/m² bis 100 g/m² aufweist und eine Volumen-Scheindichte von weniger als 250 kg/m³, vorteilhaft weniger als 150 kg/m³, vorzugsweise weniger als 100 kg/m³ und genauer im Bereich von 25 kg/m³ bis 75 kg/m³ aufweist.

3. Austauschkörper nach Anspruch 1 oder 2, **dadurch gekennzeichnet, dass** er eine Oberflächendichte in m² der Austauschoberfläche pro m³ von mehr als 400 m²/m³, vorteilhaft mehr als 500 m²/m³ und vorzugsweise mehr als 600 m²/m³ aufweist.

4. Austauschkörper nach einem der vorhergehenden Ansprüche, **dadurch gekennzeichnet, dass** die Austauschwände (21, 22, 23) des Austauschkörpers aus Papier hergestellt sind, die vorteilhaft mit einer Schutzschicht aus Kunststoff, insbesondere einem Verbundwerkstoff, einem faserartigen Material, einem imprägnierten Gewebe oder einer Kombination aus diesen Materialien oder mit einem Material, das eine Struktur in Form eines Films oder einer Schicht, der bzw. die eine oder mehrere Zonen (30) aufweisen, die eine spezifische Wärmeleitfähigkeit von mehr als 10 W/(m · K), vorteilhaft mehr als 100 W/(m · K), aufweisen, beschichtet sind.

5. Austauschkörper nach einem der Ansprüche 1 bis 4, **dadurch gekennzeichnet, dass** die Wände (21, 22, 23) auf ihren zwei im Wesentlichen ebenen Flächen eine oder mehrere Verstärkungen (7) aufweisen, wobei sich eine oder mehrere Verstärkungen einer ersten Fläche auf einer Fläche einer ersten benachbarten Wand oder einer Verstärkung einer Fläche einer ersten benachbarten Wand abstützen, während eine oder mehrere Verstärkungen der zweiten Fläche sich auf einer Fläche einer zweiten benachbarten Wand oder einer Verstärkung einer zweiten benachbarten Wand abstützen.

6. Austauschkörper nach Anspruch 5, **dadurch gekennzeichnet, dass** die Verstärkungen (7) der im Wesentlichen ebenen Wände (21, 22, 23) sich im Wesentlichen über wenigstens 50 % der transversalen Länge der Wände längs einer Achse erstrecken, die in Bezug auf die transversale Richtung der Wände um einen Winkel im Bereich von 1° bis 45°, vorteilhaft im Bereich von 3° bis 30° in Bezug auf die transversale Richtung (T) der Wände (21, 22, 23) geneigt ist.

7. Austauschkörper nach einem der Ansprüche 5 und 6, **dadurch gekennzeichnet, dass** jede Wand (21, 22, 23) des Austauschkörpers auf jeder ihrer Flächen eine Reihe von Verstärkungen (7) aufweist, die sich längs einer Achse erstrecken, die einen Winkel im Bereich von 1° bis 45°, vorteilhaft von 3° bis 30°, vorzugsweise von 5° bis 25° in Bezug auf die transversale Richtung der betrachteten Wand bildet, und dass die Verstärkungen von zwei benachbarten Wänden in der Weise angeordnet sind, dass sich die Verstärkungen einer ersten Wand auf den Verstärkungen der zweiten Wand an einem Punkt oder an den Punkten oder Zonen, die voneinander beabstandet sind, abstützen.

8. Kassette (106), die wenigstens Folgendes umfasst:
- einen Austauschkörper (20) nach einem der Ansprüche 1 bis 7;
- vorteilhaft eine erste longitudinale Wand (321), die vorteilhaft beweglich oder abnehmbar ist und sich längs des ersten longitudinalen äußersten Randes (B1) des Blatts oder Films erstreckt,
- vorteilhaft eine zweite longitudinale Wand (322), die vorteilhaft beweglich oder abnehmbar ist und sich längs des zweiten longitudinalen äußersten Randes (B2) des Blatts oder Films erstreckt,
- eine dritte Wand (15), die sich längs wenigstens eines Randes oder einer Kante gekrümmter Abschnitte oder Falten (6A) der ersten Reihe erstreckt, und
- eine vierte Wand (16), die sich längs wenigstens eines Randes oder einer Kante gekrümmter oder gefalteter Abschnitte (6B) der zweiten Reihe erstreckt,
wobei die erste, die zweite, die dritte und die vierte Wand einen ersten Kreis, der durch Kanäle (P1) der ersten Reihe für eine Zirkulation des ersten Fluids (G1) gebildet ist, und einen zweiten Kreis, der durch Kanäle (P2) der zweiten Reihe für eine Zirkulation des zweiten Fluids (G2) gebildet ist, bilden,
wobei Öffnungen, um dem ersten Fluid zu ermöglichen, in die erste Reihe von Kanälen (C1) des Austauschkörpers einzutreten und hiervon auszutreten, Öffnungen, um dem zweiten Fluid zu ermöglichen, in die zweite Reihe von Kanälen des Austauschkörpers einzutreten und hiervon auszutreten, vorhanden sind,
wobei die dritte und die vierte Wand (321, 322), die vorteilhaft zueinander parallel sind, den Rand oder die Kante gekrümmter oder gefalteter Abschnitte (6A, 6B) der ersten Reihe bzw. der zweiten Reihe nur teilweise abdecken, derart, dass zwei offene Zonen definiert sind, die durch die dritte Wand getrennt sind, die einen Eingang und einen Ausgang für die Kanäle der ersten Reihe definieren, und zwei andere offene Zonen definiert sind, die durch die vierte Wand getrennt sind und einen Eingang und einen Ausgang für die Kanäle der zweiten Reihe definieren.

9. Kassette nach Anspruch 8, **dadurch gekennzeichnet, dass** einer oder mehreren Öffnungen ein Gitter und/oder ein Filterelement (17, 18) zugeordnet sind.

10. Kassette nach einem der Ansprüche 8 bis 9, **dadurch gekennzeichnet**, das die Kassette ein oder mehrere Mittel (214, 215) umfasst, die den Betrieb des ersten und/oder des zweiten mechanischen Mittels im Fall einer nicht korrekten Positionierung der Kassette in Bezug auf den Träger (100) einer Anordnung, die dazu bestimmt ist, mit der Kassette einen Wärmetauscher (99) zu bilden, verhindern.

11. Wärmetauscher (99), der wenigstens Folgendes umfasst:
- einen Träger (100);
- einen Tauscherkörper (20) nach einem der Ansprüche 1 bis 7, der von dem Träger (100) getragen wird;
- eine erste longitudinale Wand (321), die sich längs des ersten longitudinalen äußersten Randes (B1) des Blatts oder Films erstreckt,
- eine zweite longitudinale Wand (322), die sich längs des zweiten longitudinalen äußersten Randes (B2) des Blatts oder Films erstreckt,
- eine dritte Wand (15),die sich längs wenigstens eines Randes oder einer Kante gekrümmter oder gefalteter Abschnitte (6A) der ersten Reihe erstreckt, und
- eine vierte Wand (16), die sich längs wenigstens eines Randes oder einer Kante gekrümmter oder gefalteter Abschnitte (6B) der zweiten Reihe erstreckt,
wobei die erste, die zweite, die dritte und die vierte Wand einen ersten Kreis (P1), der aus Kanälen der ersten Reihe für eine Zirkulation des ersten Fluids (G1) gebildet ist, und einen zweiten Kreis (P2), der aus Kanälen der zweiten Reihe für eine Zirkulation des zweiten Fluids (G2) gebildet ist, gebildet sind,
wobei der Austauschkörper und die erste, die zweite, die dritte und die vierte Wand vorteilhaft eine Kassette nach einem der Ansprüche 8 bis 10 bilden,
- ein erstes mechanisches Mittel (107), um eine Zirkulation des ersten Fluids in dem ersten Kreis zu erzeugen, und
- ein zweites mechanisches Mittel (108), um eine Zirkulation des zweiten Fluids in dem zweiten Kreis zu erzeugen.

12. Tauscher nach Anspruch 11, **dadurch gekennzeichnet, dass** das erste mechanische Mittel (107) dafür ausgelegt ist, das erste Fluid in eine erste Verteilungskammer (205) zu drängen, wobei die erste Verteilungskammer (205) eine Öffnung, um das erste Fluid, das von dem ersten mechanischen Mittel (107) kommt, aufzunehmen, und eine zweite Öffnung oder Reihe von Öffnungen, die mit einer Reihe von Eingangsdurchlässen in die Kanäle (P1) der ersten Reihe, die den ersten Kreis (C1) bildet, kommunizieren, aufweist, wobei die erste Verteilungskammer (205) vorteilhaft so beschaffen ist, dass für wenigstens 75 % der Kanäle (P1) der ersten Reihe, vorteilhaft wenigstens 85 % der Kanäle der ersten Reihe und vorzugsweise wenigstens 95 % der Kanäle der ersten Reihe der Fluiddurchfluss (ausgedrückt in Litern pro Minute), der sich durch den Kanal bewegt, im Bereich von 50 % bis 150 %, vorteilhaft von 75 % bis 125 % und vorzugsweise von 85 % bis 115 % des mittleren Durchflusses des Fluids, der sich in einem Kanal der Kanäle der ersten Reihe bewegt, liegt, wobei der mittlere Durchfluss gleich dem gesamten Durchfluss des Fluids, der sich durch sämtliche Kanäle bewegt, dividiert durch die Anzahl von Kanälen der ersten Reihe ist.

13. Tauscher nach Anspruch 12, **dadurch gekennzeichnet, dass** das zweite mechanische Mittel (108) dafür ausgelegt ist, das zweite Fluid (G2) in eine zweite Verteilungskammer (210) zu drängen, wobei die zweite Verteilungskammer (210) eine Öffnung, um das zweite Fluid (G2) aufzunehmen, das von dem zweiten mechanischen Mittel (108) kommt, und eine Öffnung oder eine Reihe von Öffnungen, die mit einer Reihe von Eingangsdurchlässen zu den Kanälen (P2) der zweiten Reihe, die den zweiten Kreis bildet, kommunizieren, aufweist, wobei die zweite Verteilungskammer vorteilhaft so beschaffen ist, dass für wenigstens 75 % der Kanäle der zweiten Reihe, vorteilhaft wenigstens 85 % der Kanäle der zweiten Reihe und vorzugsweise wenigstens 95 % der Kanäle der zweiten Reihe der Durchfluss des zweiten Fluids (ausgedrückt in Litern pro Minute), der sich in einem Kanal bewegt, im Bereich von 50 % bis 150 %, vorteilhaft von 75 % bis 125 % und vorzugsweise von 85 % bis 115 % des mittleren Durchflusses des zweiten Fluids, der sich in einem Kanal der Kanäle der zweiten Reihe bewegt, liegt, wobei der mittlere Durchfluss gleich dem gesamten Fluiddurchfluss, der sich durch sämtliche Kanäle bewegt, dividiert durch die Anzahl der Kanäle der zweiten Reihe ist.

14. Tauscher nach einem der Ansprüche 11 bis 13, **dadurch gekennzeichnet, dass** der Austauschkörper (20) im Wesentlichen die Form eines Parallelepipeds hat und vorteilhaft in einer Kammer (106) entnehmbar untergebracht ist, die im Wesentlichen die Form eines Parallelepipeds hat und eine untere Wand (201) sowie eine obere Wand (202), die im Wesentlichen zueinander parallel sind, aufweist,
dass der Austauschkörper (20) eine obere Fläche (15) mit Durchlässen für eine Reihe von Kanälen (P1) und eine untere Fläche (16) mit Durchlässen für eine andere Reihe von Kanälen (P2) aufweist, wobei die untere und die obere Fläche im Wesentlichen zueinander parallel sind, wobei die untere Fläche (16) und die obere Fläche (15) des Austauschkörpers in Bezug auf die untere Wand (201) bzw. die obere Wand (202) der Kammer geneigt sind, derart, dass eine untere Verteilungskammer (205) und eine obere Verteilungskammer (209) definiert sind, und
dass die Neigung zwischen der unteren Fläche (16) des Austauschkörpers (20) und der unteren Wand (201) der Kammer beispielsweise im Bereich von 1° bis 20°, vorteilhaft von 2° bis 10° liegt, während die Neigung zwischen der oberen Fläche (15) des Austauschkörpers (20) und der oberen Wand (200) der Kammer beispielsweise im Bereich von 1° bis 20°, vorteilhaft von 2° bis 10°, liegt.

15. Tauscher nach einem der Ansprüche 11 bis 14, **dadurch gekennzeichnet, dass** der Tauscher (99) ein Gehäuse (106) umfasst, das aufweist:
- eine erste Öffnung (103) oder eine Reihe erster Öffnungen, um das erste Fluid (G1) dem ersten mechanischen Mittel (107) zuzuführen, das das erste Fluid (G1) in Kanäle (P1) der ersten Reihe des Austauschkörpers (20) drängt,
- eine zweite Öffnung (104) oder eine Reihe zweiter Öffnungen, um das erste Fluid (G1) nach seinem Durchgang durch die erste Reihe von Kanälen (P1) von dem Austauschkörper (20) abzuführen,
- eine dritte Öffnung (102) oder eine Reihe dritter Öffnungen für den Eintritt des zweiten Fluids (G2) in das zweite mechanische Mittel (108), das das zweite Fluid in die Kanäle (P2) der zweiten Reihe des Austauschkörpers drängt, und
- eine vierte Öffnung (105) oder eine Reihe vierter Öffnungen, um das zweite Fluid (G2), das aus der zweiten Reihe von Kanälen (P2) austritt, von dem Gehäuse (106) abzuführen, wobei die Öffnungen voneinander verschieden sind, und
dass das Gehäuse (106) wenigstens eine bewegliche oder abnehmbare Tür (101) umfasst, die, sobald sie geöffnet oder angehoben ist, einen Zugang wenigstens zu dem Austauschkörper (20) und/oder zu Filterelementen (17, 18) ermöglicht, nachdem eventuell die dritte oder die vierte Wand angehoben worden ist.

16. Tauscher nach einem der Ansprüche 11 bis 15, **dadurch gekennzeichnet, dass** der Tauscher (99) ein Gehäuse (106) umfasst, das aufweist:
- eine erste Öffnung (103) oder eine Reihe erster Öffnungen, um das erste Fluid (G1) dem ersten mechanischen Mittel (107) zuzuführen, das das erste Fluid (G1) in die Kanäle (P1) der ersten Reihe des Austauschkörpers (20) drängt,
- eine zweite Öffnung (104) oder eine Reihe zweiter Öffnungen, um das erste Fluid (G1) nach seinem Durchgang durch die erste Reihe von Kanälen (P1) von dem Austauschkörper (20) abzuführen,
- eine dritte Öffnung (102) oder eine Reihe dritter Öffnungen für den Eintritt des zweiten Fluids (G2) in das zweite mechanische Mittel (108), das das zweite Fluid in die Kanäle (P2) der zweiten Reihe des Austauschkörpers drängt, und
- eine vierte Öffnung (105) oder eine Reihe vierter Öffnungen, um das zweite Fluid (G2), das aus der zweiten Reihe von Kanälen (P2) austritt, von dem Gehäuse (100) abzuführen, wobei die Öffnungen voneinander verschieden sind, und
dass das Gehäuse (106) einen Aufnahmeraum (212) aufweist, in dem das erste mechanische Mittel (107) angeordnet oder montiert ist, und/oder einen Aufnahmeraum (213) aufweist, in dem das zweite mechanische Mittel (108) angeordnet oder montiert ist, wobei das Gehäuse (100) vorteilhaft ein Verbindungssystem (214, 215) aufweist, das die Versorgung des ersten mechanischen Mittels (107) und/oder des zweiten mechanischen Mittels (108), die am Gehäuse montiert sind, ermöglicht, wenn das Gehäuse (106) an dem Träger (100) einer Vorrichtung, die dazu bestimmt ist, einen Wärmetauscher zu bilden, korrekt angeordnet ist, wobei das Verbindungssystem (214, 215) die Versorgung mit Energie des ersten und/oder des zweiten mechanischen Mittels (107, 108) verhindert, falls das Gehäuse (106) an dem Träger oder in dem Tauscher nicht korrekt angeordnet ist.

## Claims

1. A heat-exchange body (20) for transferring calories from a first gaseous fluid (G1) to a second gaseous fluid (G2), said heat-exchange body comprising a sheet or film (1) folded or bent into a concertina shape defining a first series of bent or folded portions (6A) of the sheet or film (1), a second series of bent or folded portions (6B) of the sheet or film (1), a series of transverse heat-exchange walls (21, 22, 23), which are substantially flat and are located substantially parallel to one another, each extending between a bent or folded portion (6A) of the first series and a bent or folded portion of the second series, said folded or bent sheet or film (6B) thus forming a first series of channels (C1) and a second series of channels (C2), said channels extending transversely between a first longitudinal end edge (B1) of the folded or bent sheet or film and a second longitudinal end edge (B2) of the folded or bent sheet or film located opposite said first longitudinal end edge (B1),
the heat-exchange body being adapted so as to be associated with:
- a first longitudinal wall (321) extending along the first longitudinal end edge (B1) of the sheet or film (1),
- a second longitudinal wall (322) extending along the second longitudinal end edge (B2) of the sheet or film (1),
- a third wall (15) extending along at least one edge or ridge of the bent or folded portions (6A) of the first series, and
- a fourth wall (16) extending along at least one edge or ridge of the bent or folded portions (6B) of the second series,
in such a way as to form a first circuit consisting of channels (P1) of the first series for a circulation of the first fluid (G1) and a second circuit consisting of channels (P2) of the second series for a circulation of the second fluid (G2), said heat-exchange body essentially being **characterized**
**in that** the substantially flat, transverse heat-exchange walls (21, 22, 23) have a thickness of less than 0.5mm, advantageously less than 0.3mm and preferably have a thickness of between 0.05mm and 0.1 mm,
**in that** the transverse heat-exchange walls (21, 22, 23), which are substantially flat and advantageously extend substantially parallel to one another, are made of a material, which is at least resistant to water vapour and water and has an average thermal conductivity of less than 0.25 W/(m.K) and in particular less than 0.20 W/(m.K) in direction of the length of the heat-exchange wall in question,
**in that** the transverse heat-exchange walls (21, 22, 23) have a height of at least 1 cm and a length of at least 3cm, the length/height ratio being greater than 1.5, advantageously less than 5, preferably between 2 and 4 and in particular between 2 and 3;
**in that** the walls (21, 22, 23) each have at least one recess (7) designed to rest against an adjacent wall or a recess of an adjacent wall, in such a way as to form, in the channel (P1, P2) between said adjacent walls, at least one element (7) guiding the fluid circulating in said channel, said element (7) being designed to increase the heat-exchange surface, the length of the path travelled by the gas and/or the turbulence of the flow so as to increase the thermal exchange from one fluid (G1) to the other fluid (G2), and
**in that** the flat portions (21, 22) of the adjacent walls defining a channel (P1) are at a distance from one another of less than 8mm and advantageously less than 6mm.

2. A heat-exchange body according to Claim 1, **characterized in that** it has a surface density of less than 500g/m², advantageously less than 300g/m², preferably less than 200g/m², more specifically less than 100g/m² and in particular between 25g/m² and 100g/m², and an apparent bulk density of less than 250kg/m³, advantageously less than 150kg/m³, preferably less than 100kg/m³ and more specifically between 25kg/m³ and 75kg/m³.

3. A heat-exchange body according to Claim 1 or 2, **characterized in that** it has a surface density in m² of heat-exchange surface/m³ of more than 400m²/m³, advantageously of more than 500m²/m³ and preferably of more than 600m²/m³.

4. A heat-exchange body according to one of the preceding claims, **characterized in that** the heat-exchange walls (21, 22, 23) of the heat-exchange body are made of paper, advantageously provided with a protective coating, of plastic material, composite material, fibrous materials, impregnated fabrics, or of a combination of such materials, or of a material having a film- or sheet-like structure comprising one or more zones (30) having a thermal conductivity greater than 10 W/(m.K) and advantageously greater than 100 W/(m.K).

5. A heat-exchange body according to one of Claims 1 to 4, **characterized in that** the walls (21, 22, 23) have on their two substantially flat surfaces one or more recesses (7), one or more recesses of a first surface resting against a surface of a first adjacent wall or against a recess of a surface of a first adjacent wall, whilst one or more recesses of the second surface rest against a surface of a second adjacent wall or against a recess of a second adjacent wall.

6. A heat-exchange body according to Claim 5, **characterized in that** the recesses (7) of the substantially flat walls (21, 22, 23) extend substantially over at least 50% of the transverse length of the walls, along an inclined axis relative to the transverse direction of the walls at an angle of between 1° and 45° and advantageously between 3° and 30° relative to the transverse direction (T) of the walls (21, 22, 23).

7. A heat-exchange body according to one of Claims 5 and 6, **characterized in that** each wall (21, 22, 23) of the heat-exchange body has on each of its surfaces a series of recesses (7) extending along an axis forming an angle of between 1° and 45°, advantageously of between 3° and 30° and preferably of between 5° and 25° relative to the transverse direction of the wall in question, and **in that** the recesses of two adjacent walls are disposed in such a way that recesses of a first wall rest against recesses of the second wall at one or more points or zones located at a distance from one another.

8. A cassette (106) comprising at least:
- a heat-exchange body (20) according to any one of Claims 1 to 7;
- advantageously a first longitudinal wall (321), advantageously movable or detachable, extending along the first longitudinal end edge (B1) of the sheet or film,
- advantageously a second longitudinal wall (322), advantageously movable or detachable, extending along the second longitudinal end edge (B2) of the sheet or film,
- a third wall (15) extending along at least one edge or ridge of the bent or folded portions (6A) of the first series, and
- a fourth wall (16) extending along at least one edge or ridge of the bent or folded portions (6B) of the second series,
said first, second, third and fourth walls forming a first circuit consisting of channels (P1) of the first series for a circulation of the first fluid (G1) and a second circuit consisting of channels (P2) of the second series for a circulation of the second fluid (G2),
openings being present to allow the first fluid to enter the first series of channels (C1) of the heat-exchange body and to exit from it, whilst openings are present to allow the second fluid to enter the second series of channels of the heat-exchange body and to exit from it,
the third and fourth walls (321, 322), advantageously located substantially parallel to one another, only partly covering the edge or ridge of the bent or folded portions (6A, 6B) respectively of the first series and of the second series, in such a way as to define two open zones separated by the third wall defining an inlet and an outlet for the channels of the first series, and two other open zones separated by the fourth wall defining an inlet and an outlet for the channels of the second series.

9. A cassette according to Claim 8, **characterized in that** one or more openings are associated with a grid and/or with a filter element (17, 18).

10. A cassette according to one of Claims 8 to 9, **characterized in that** the cassette includes one or more means (214, 215) for preventing operation of the first and/or second mechanical means in the event of incorrect positioning of the cassette relative to a support (100) of a unit designed, together with the cassette, to form a heat exchanger (99).

11. A heat exchanger (99) comprising at least:
- a support (100);
- a heat-exchange body (20) according to one of Claims 1 to 7 and carried by said support (100);
- a first longitudinal wall (321) extending along the first longitudinal end edge (B1) of the sheet or film,
- a second longitudinal wall (322) extending along the second longitudinal end edge (B2) of the sheet or film,
- a third wall (15) extending along at least one edge or ridge of bent or folded portions (6A) of the first series, and
- a fourth wall (16) extending along at least one edge or ridge of bent or folded portions (6B) of the second series,
said first, second, third and fourth walls forming a first circuit (P1) consisting of channels of the first series for a circulation of the first fluid (G1) and a second circuit (P2) consisting of channels of the second series for a circulation of the second fluid (G2),
said heat-exchange body and said first, second, third and fourth walls advantageously forming a cassette according to one of Claims 8 to 10,
- a first mechanical means (107) for generating a circulation of the first fluid in the first circuit, and
- a second mechanical means (108) for generating a circulation of the second fluid in the second circuit.

12. A heat exchanger according to Claim 11, **characterized in that** the first mechanical means (107) is designed to drive the first fluid into a first distribution chamber (205), said first distribution chamber (205) having an opening for receiving the first fluid from the first mechanical means (107) and an opening or series of openings communicating with a series of passages for admission to the channels (P1) of the first series forming the first circuit (C1), said first distribution chamber (205) advantageously being designed so that, at least for 75% of the channels (P1) of the first series and advantageously at least 85% of the channels of the first series and preferably at least 95% of the channels of the first series, the flow of fluid (expressed in litres per minute) passing through a channel is between 50% and 150%, advantageously between 75% and 125% and preferably between 85% and 115% of the average flow of fluid passing through one channel of the channels of the first series, said average flow being equal to the total flow of fluid passing through all said channels divided by the number of channels of said first series.

13. A heat exchanger according to Claim 12, **characterized in that** the second mechanical means (108) is designed to drive the second fluid (G2) into a second distribution chamber (210), said second distribution chamber (210) having an opening for receiving the second fluid (G2) from the second mechanical means (108) and an opening or series of openings communicating with a series of passages for admission to the channels (P2) of the second series forming the second circuit, said second distribution chamber advantageously being designed so that, at least for 75% of the channels of the second series and advantageously at least 85% of the channels of the second series and preferably at least 95% of the channels of the second series, the flow of the second fluid (expressed in litres per minute) passing through a channel is between 50% and 150%, advantageously between 75% and 125% and preferably between 85% and 115% of the average flow of the second fluid passing through one channel of the channels of the second series, said average flow being equal to the total flow of fluid passing through all said channels divided by the number of channels of the second series.

14. A heat exchanger according to one of Claims 11 to 13, **characterized in that** the heat-exchange body (20) is substantially parallelepipedal in form, and is housed, advantageously so as to be removable, in a substantially parallelepipedal chamber (106) having a lower wall (201) and an upper wall (202) which extend substantially parallel to one another,
**in that** the heat-exchange body (20) has an upper surface (15) with passages for a series of channels (P1) and a lower surface (16) with passages for the other series of channels (P2), said lower and upper surfaces extending substantially parallel to one another, the lower (16) and upper (15) surfaces of the heat-exchange body being inclined at an angle relative to the lower wall (201) and the upper wall (202) of the chamber respectively, in such a way as to define a lower distribution chamber (205) and an upper distribution chamber (209), and
**in that** the angle of inclination between the lower surface (16) of the heat-exchange body (20) and the lower wall (201) of the chamber is for example between 1° and 20° and advantageously between 2° and 10°, whilst the angle between the upper surface (15) of the heat-exchange body (20) and the upper wall (200) of the chamber is, for example, between 1° and 20° and advantageously between 2° and 10°.

15. A heat exchanger according to any one of Claims 11 to 14, **characterized in that** the heat exchanger (99) includes a housing (106) having:
- a first opening (103) or series of first openings for conveying the first fluid (G1) towards the first mechanical means (107) driving said first fluid (G1) into channels (P1) of the first series of the heat-exchange body (20),
- a second opening (104) or series of second openings for evacuating the first fluid (G1) after its passage through the first series of channels (P1) of the heat-exchange body (20),
- a third opening (102) or series of third openings for admission of the second fluid (G2) to the second mechanical means (108), driving said second fluid into channels (P2) of the second series of the heat-exchange body, and
- a fourth opening (105) or series of fourth openings for discharging from the housing (106) the second fluid (G2) exiting from the second series of channels (P2), in which case said openings are separate from one another,
**and in that** the housing (106) has at least one movable or detachable door (101), which, once it has been opened or removed, allows access at least to the heat-exchange body (20) and/or filter elements (17, 18), possibly after removal of the third or fourth wall.

16. A heat exchanger according to any one of Claims 11 to 15, **characterized in that** the heat exchanger (99) includes a housing (106) having:
- a first opening (103) or series of first openings for conveying the first fluid (G1) towards the first mechanical means (107) driving said first fluid (G1) into channels (P1) of the first series of the heat-exchange body (20),
- a second opening (104) or series of second openings for evacuating the first fluid (G1) after its passage through the first series of channels (P1) of the heat-exchange body (20),
- a third opening (102) or series of third openings for admission of the second fluid (G2) to the second mechanical means (108), driving said second fluid into channels (P2) of the second series of the heat-exchange body, and
- a fourth opening (105) or series of fourth openings for discharging from the housing (100) the second fluid (G2) exiting from the second series of channels (P2), in which case said openings are separate from one another,
**and in that** the housing (106) includes a seating (212), in which the first mechanical means (107) is placed or mounted, and/or a seating (213), in which the second mechanical means (108) is placed or mounted, the housing (100) advantageously including a connection system (214, 215) allowing power to be supplied to the first mechanical means (107) and/or second mechanical means (108) mounted on the housing when the housing (106) is placed correctly on the support (100) of a device designed to form a heat exchanger, said connection system (214, 215) preventing the supply of power to the first and/or second mechanical means (107, 108) in the event of incorrect placement of the housing (106) on the support or in the heat-exchanger.
